# EUROPEAN PATENT SPECIFICATION

(11) **EP 3 926 500 B1**
(45) Date of publication and mention of the grant of the patent: **30.08.2023**
(21) Application number: 19924974.9
(22) Date of filing: 17.04.2019
(51) Int. Cl.: G06F 21/51, G06F 21/44, G06F 21/57

(54) **DEVICE UPGRADE METHOD AND RELATED DEVICE**
UPGRADE-VERFAHREN FÜR VORRICHTUNG UND ZUGEHÖRIGE VORRICHTUNG
PROCÉDÉ DE MISE À NIVEAU DE DISPOSITIF ET DISPOSITIF ASSOCIÉ

(43) Date of publication of application: 22.12.2021
(73) Proprietor: Huawei Technologies Co., Ltd., Shenzhen, Guangdong 518129 (CN)
(72) Inventor: YANG, Yanjiang, Shenzhen, Guangdong 518129 (CN); WEI, Zhuo, Shenzhen, Guangdong 518129 (CN); YASMIN, Rehana, Shenzhen, Guangdong 518129 (CN); LIU, Xutao, Shenzhen, Guangdong 518129 (CN)
(74) Representative: Gill Jennings & Every LLP
(86) International application number: PCT/CN2019/083069
(87) International publication number: WO 2020/211016

(56) References cited:
- WO-A1-2018/208777
- CN-A- 102 572 595
- CN-A- 108 196 867
- CN-A- 108 923 933
- CN-A- 109 214 168
- US-A1- 2019 109 708
- US-B2- 10 244 394
- Tomás Alexandre Diniz De Pinho: "UpdaThing: A secure and open firmware updatesystem for Internet of Things devices", , 31 October 2016 (2016-10-31), pages 1-65, XP055478306, Retrieved from the Internet: URL:https://fenix.tecnico.ulisboa.pt/downl oadFile/1689244997256690/dissertation.pdf [retrieved on 2018-05-24]

## Description

### TECHNICAL FIELD

This application relates to the field of device upgrade technologies, and in particular, to a device upgrade method and a related device.

### BACKGROUND

In remote online upgrade, a device (for example, a computer or a mobile phone) downloads an upgrade file from a server to update an operating system, software, and the like to a latest state when the device is connected to a network. In this way, the device can be upgraded automatically without much manual intervention, costs are low, and upgrade efficiency is high.

For example, an upgrade device is a vehicle-mounted device. In the future, each vehicle is a network node in the internet of vehicles, and is essentially the same as a networked device such as a computer or a mobile phone. It is estimated that 60% to 70% of vehicle recalls in North America are due to firmware/software issues. Therefore, upgrading firmware/software of vehicle-mounted devices is essential. Conventionally, firmware/software of a to-be-upgraded vehicle-mounted device is upgraded through a vehicle recall, which has disadvantages of high costs and a long cycle.

Therefore, in the future, a vehicle-mounted device is upgraded in a more flexible remote online upgrade manner, for example, over-the-air (Over-The-Air, OTA), as a current computer and a current mobile phone are remotely upgraded over a network. Remote upgrade for firmware/software of a vehicle-mounted device may bring many benefits. For example, remote upgrade for the firmware/software of the vehicle-mounted device helps quickly fix critical bugs of the firmware/software, improves vehicle security, and helps add a new function or a new feature in a timely manner to the vehicle throughout a service life. Therefore, the firmware/software can be upgraded in the OTA manner without a vehicle recall. This greatly reduces substantial costs for a vehicle manufacturer or a vehicle seller and brings convenience to a vehicle user.

However, in a remote upgrade process of the vehicle-mounted device, there may be some potential security hazards. For example, an upgrade file is unauthorized stolen or tampered with, and a security processing key in the vehicle-mounted device is unauthorized stolen or tampered with. All these may cause an upgrade failure or anomaly of the vehicle-mounted device, and finally endanger driving safety of a user. Therefore, how to ensure secure and efficient upgrade for firmware/software of related devices including the vehicle-mounted device becomes an urgent problem that needs to be resolved.

CN 108196867 A relates to device for upgrading firmware, equipment and its firmware upgrade method of equipment.

Tomas Alexandre Diniz De Pinho: "UpdaThing: A secure and open firmware update system for Internet of Things devices", 31 October 2016 (2016-10-31), pages 1-65, describes a secure and open firmware update system for Internet of Things devices.

### SUMMARY

Implementations of the present disclosure provide a device upgrade method and a related device, to resolve a technical problem that firmware/software of an upgrade device cannot be upgraded securely and efficiently.

The invention has been defined in the independent claims. Further specific technical features have been defined in the dependent claims.

According to a first aspect, an implementation of the present disclosure provides a device upgrade method. The device upgrade method may be applied to a device upgrade system, and the device upgrade system includes a control device and a to-be-upgraded device. The method may include:

The control device receives first upgrade file data sent by a communications device, where the first upgrade file data is upgrade file data generated after the communications device performs first security processing on an upgrade file by using a first key.

The control device performs second security processing on the first upgrade file data by using a second key, to generate second upgrade file data, and sends the second upgrade file data to the to-be-upgraded device.

The to-be-upgraded device receives the second upgrade file data, performs security verification on the second upgrade file data by using a third key and a fourth key, and performs upgrade by using the upgrade file if the verification succeeds, where the third key is a verification key matching the first key, and the fourth key is a verification key matching the second key.

In this implementation of the present disclosure, in a device upgrade architecture, a part of keys that are used by the control device in the device upgrade system to perform secure transmission between the control device and the to-be-upgraded device (different to-be-upgraded devices correspond to different keys) is stored on the communications device outside the device upgrade system, to avoid that the keys are stored in a complete form on the control device and are easily stolen or tampered with by an attacker. Besides, because the communications device is also a sender that transmits the upgrade file to the device upgrade system, in addition to storing the part of the keys, when sending the upgrade file to the control device, the communications device may further perform the first security processing on the upgrade file by using the stored part (namely, the first key) of the keys, and then send the upgrade file to the control device, so that the control device can perform further security processing by using the other part (namely, the second key) of the keys. Finally, the upgrade file on which security processing is performed by using the first key and the second key is sent to the to-be-upgraded device, and the to-be-upgraded device performs the security verification by using the negotiated third key and fourth key. In this way, a security processing process of the upgrade file that should be independently completed by the control device is jointly completed by the communications device and the control device. That is, the communications device and the control device participate in the security processing of the upgrade file by using respective parts of the keys, and do not need to restore the two parts of the keys to a complete key before performing the security processing on the upgrade file, thereby further avoiding occurrence or storage of the complete key on the control device, so that an attacker cannot obtain the complete key from the control device at one time. This greatly reduces a possibility that an attacker intercepts or tampers with the complete key, ensuring security of the upgrade file during transmission in the device upgrade system.

In a possible implementation, the first security processing includes: generating a first message authentication code MAC of the upgrade file based on the first key, where the first upgrade file data includes the upgrade file and the first MAC. In this implementation of the present disclosure, because generating a message authentication code for the upgrade file can ensure integrity and source authenticity of the upgrade file, a problem that the upgrade file may be tampered with and forged by an attacker during transmission in the device upgrade system can be resolved. Symmetric keys are used in a process of generating the MAC. Therefore, on a basis of ensuring data security, a calculation amount of security verification can be reduced, and upgrade efficiency can be improved.

In a possible implementation, the second security processing includes: generating a second MAC of the upgrade file based on the second key, and aggregating the first MAC and the second MAC to obtain a third MAC, where the second upgrade file data includes the upgrade file and the third MAC. In this implementation of the present disclosure, the first security processing includes: The communications device generates the first MAC of the upgrade file by using the first key stored on the communications device. The second security processing includes: The control device first generates the second MAC of the upgrade file by using the second key stored on the control device, and then aggregates the first MAC and the second MAC to obtain a message authentication code related to the upgrade file, the first key, and the second key, so that the to-be-upgraded device can perform, by using the matched third key and the matched fourth key, security verification on the message authentication code that is obtained after aggregation. In addition, because generating a message authentication code for the upgrade file can ensure integrity and source authenticity of the upgrade file, a problem that the upgrade file may be tampered with and forged by an attacker during transmission in the device upgrade system can be resolved. Symmetric keys are used in a process of generating the MAC. Therefore, on a basis of ensuring data security, a calculation amount of security verification can be reduced, and upgrade efficiency can be improved.

In a possible implementation, the second security processing includes: generating a fourth MAC of the first upgrade file data based on the second key, where the second upgrade file data includes the upgrade file and the fourth MAC. In this implementation of the present disclosure, the first security processing includes: The communications device generates the first MAC of the upgrade file by using the first key stored on the communications device. The second security processing includes: The control device first generates the fourth MAC of the first upgrade file data (including the upgrade file and the first MAC) by using the second key stored on the control device, to obtain a message authentication code related to the upgrade file, the first key, and the second key, so that the to-be-upgraded device can perform, by using the matched third key and the matched fourth key, security verification on the message authentication code that is obtained after aggregation. In addition, because generating a message authentication code for the upgrade file can ensure integrity and source authenticity of the upgrade file, a problem that the upgrade file may be tampered with and forged by an attacker during transmission in the device upgrade system can be resolved. Symmetric keys are used in a process of generating the MAC. Therefore, on a basis of ensuring data security, a calculation amount of security verification can be reduced, and upgrade efficiency can be improved.

In a possible implementation, the first key and the third key are symmetric keys, the second key and the fourth key are symmetric keys, and the method further includes: The control device generates a target key, and splits the target key into the first key and the second key. The control device sends the target key to the to-be-upgraded device, and sends the first key to the communications device. The control device stores the second key, and deletes the target key. In this implementation of the present disclosure, the first key and the second key are obtained by splitting the target key generated by the control device in the device upgrade system, and the control device sends the first key obtained after splitting to the communications device for storage, and sends the target key to the to-be-upgraded device for storage, to ensure separate storage and subsequent separate uses of a complete key.

In a possible implementation, the first key and the third key are symmetric keys, the second key and the fourth key are symmetric keys, and the method further includes: The to-be-upgraded device generates a target key, and splits the target key into the first key and the second key. The to-be-upgraded device sends the first key to the communications device, and sends the second key to the control device. The to-be-upgraded device stores the target key, and deletes the first key and the second key. In this implementation of the present disclosure, the first key and the second key are obtained by splitting the target key generated by the to-be-upgraded device in the device upgrade system, and the to-be-upgraded device sends the first key obtained after splitting to the communications device for storage, and sends the second key to the control device for storage, to ensure separate storage and subsequent separate uses of a complete key.

In a possible implementation, the method further includes: The to-be-upgraded device splits the stored target key into the third key and the fourth key before performing the security verification on the second upgrade file data by using the third key and the fourth key. In this implementation of the present disclosure, regardless of whether the target key is generated by the control device or by the to-be-upgraded device, the to-be-upgraded device needs to split the target key to obtain the third key and the fourth key to perform the security verification by using the third key and the fourth key.

In a possible implementation, the upgrade file is signed by using a digital signature. The first upgrade file data is upgrade file data generated after the communications device performs the first security processing on the upgrade file by using the first key after obtaining the upgrade file and verifying the digital signature. In this implementation of the present disclosure, in a process in which the communications device generates the first upgrade file data, if the upgrade file is digitally signed when the communications device obtains the upgrade file, signature verification further needs to be first performed on the upgrade file. If the signature verification succeeds (for example, a server performs signature verification by using a private key, and the communications device performs signature verification by using a public key), it indicates that the upgrade file is secure and authorized, and then the communications device performs the first security processing on the upgrade file. In other words, the communications device needs to first determine that the upgrade file is secure and authorized, and then performs further security processing. If the signature verification fails, the communications device cancels the upgrade, so as not to threaten security of the device.

In a possible implementation, the upgrade file in the first upgrade file data is further signed by using a digital signature. Before the control device performs the second security processing on the first upgrade file data by using the second key, the method further includes: The control device performs signature verification on the digital signature, and performs the second security processing on the first upgrade file data by using the second key if the signature verification succeeds. In this implementation of the present disclosure, after the communications device determines that the upgrade file is secure and authorized and performs the first security processing, the communications device may continue carrying the digital signature in the first upgrade file data, to prevent the first upgrade file data from being tampered with and forged by an unauthorized attacker in a process in which the communications device sends the first upgrade file data to the control device. Therefore, correspondingly, the control device also first performs signature verification on the digital signature, and performs the second security processing after the signature verification succeeds (for example, a server performs signature verification by using a private key, and the communications device performs signature verification by using a public key). It should be noted that, because security verification is performed between the control device and the to-be-upgraded device through the second security processing related to the first key and the second key, when the control device sends the second upgrade file data to the to-be-upgraded device, the digital signature may be removed. That is, the to-be-upgraded device may not need to perform signature verification on the digital signature.

In a possible implementation, the method further includes: After the to-be-upgraded device is successfully upgraded based on the upgrade file, the to-be-upgraded device sends an upgrade success message to the control device, where the upgrade success message is a message on which security protection is performed by using the fourth key. In this implementation of the present disclosure, after the to-be-upgraded device is successfully upgraded, the to-be-upgraded device may feed back the upgrade success message to the control device. To ensure secure transmission of the upgrade success message between the to-be-upgraded device and the control device, the upgrade success message may be protected by using the fourth key, and the control device may perform corresponding security verification by using the stored second key, to reuse the second key and the fourth key. Therefore, a key does not need to be regenerated and storage space is saved.

In a possible implementation, the method further includes: After determining that the to-be-upgraded device is successfully upgraded, the control device indicates the communications device to update a rollback file of the upgrade file; and/or after determining that the to-be-upgraded device fails to be upgraded, the control device obtains a rollback file of the upgrade file from the communications device, and sends the rollback file to the to-be-upgraded device to perform a rollback operation. In this implementation of the present disclosure, the communications device may provide the rollback file of the upgrade file for the device upgrade system. Regardless of whether the to-be-upgraded device is successfully upgraded or fails to be upgraded, the communications device may perform a rollback operation on the current upgrade file, so that the rollback file can be referenced when the upgrade file needs to be obtained in an upgrade process of the to-be-upgraded device.

In a possible implementation, the first key and the second key are generated and split by a server, and are sent by the server to the communications device and the control device, respectively. Optionally, after generating the target key, the server sends the target key to the control device or the to-be-upgraded vehicle-mounted device for splitting. For example, the server is an upgrade server, a key server, or another server. In this implementation of the present disclosure, a process of generating the target key and/or splitting the target key may be performed by the server, so that calculation amounts of the control device and the to-be-upgraded device can be reduced, and upgrade efficiency can be improved.

In a possible implementation, the third key and the fourth key are split by a server and then sent to the to-be-upgraded vehicle-mounted device. For example, the server is an upgrade server, a key server, or another server. In this implementation of the present disclosure, generation and/or splitting of the original key corresponding to the third key and the fourth key may be performed by the server, so that calculation amounts of the control device and the to-be-upgraded device can be reduced, and upgrade efficiency can be improved.

According to a second aspect, an implementation of the present disclosure provides a device upgrade system, which may include a communications device, a control device, and a to-be-upgraded device. The communications device is configured to perform first security processing on an upgrade file by using a first key, to generate first upgrade file data, and send the first upgrade file data to the control device. The control device is configured to receive the first upgrade file data sent by the communications device, perform second security processing on the first upgrade file data by using a second key, to generate second upgrade file data, and send the second upgrade file data to the to-be-upgraded device. The to-be-upgraded device is configured to receive the second upgrade file data, perform security verification on the second upgrade file data by using a third key and a fourth key, and perform upgrade by using the upgrade file if the verification succeeds, where the third key is a verification key matching the first key, and the fourth key is a verification key matching the second key.

In a possible implementation, the first security processing includes: generating a first message authentication code MAC of the upgrade file based on the first key, where the first upgrade file data includes the upgrade file and the first MAC.

In a possible implementation, the second security processing includes: generating a second MAC of the upgrade file based on the second key, and aggregating the first MAC and the second MAC to obtain a third MAC, where the second upgrade file data includes the upgrade file and the third MAC.

In a possible implementation, the second security processing includes: generating a fourth MAC of the first upgrade file data based on the second key, where the second upgrade file data includes the upgrade file and the fourth MAC.

In a possible implementation, the first key and the third key are symmetric keys, and the second key and the fourth key are symmetric keys. The control device is further configured to generate a target key, and split the target key into the first key and the second key; send the target key to the to-be-upgraded device, and send the first key to the communications device; and store the second key, and delete the target key. The communications device is further configured to receive the first key sent by the control device, and store the first key.

In a possible implementation, the first key and the third key are symmetric keys, and the second key and the fourth key are symmetric keys. The to-be-upgraded device is further configured to generate a target key, and split the target key into the first key and the second key; send the first key to the communications device, and send the second key to the control device; and store the target key, and delete the first key and the second key. The communications device is further configured to receive the first key sent by the to-be-upgraded device, and store the first key.

In a possible implementation, the to-be-upgraded device is further configured to split the stored target key into the third key and the fourth key before performing the security verification on the second upgrade file data by using the third key and the fourth key.

In a possible implementation, the upgrade file is signed by using a digital signature. The communications device is specifically configured to obtain the upgrade file, perform signature verification on the digital signature, and perform the first security processing on the upgrade file by using the first key if the signature verification succeeds.

In a possible implementation, the upgrade file in the first upgrade file data is further signed by using a digital signature. The control device is further configured to: before performing the second security processing on the first upgrade file data by using the second key, perform signature verification on the digital signature, and perform the second security processing on the first upgrade file data by using the second key if the signature verification succeeds.

In a possible implementation, the to-be-upgraded device is further configured to: after to-be-upgraded device is successfully upgraded based on the upgrade file, send an upgrade success message to the control device, where the upgrade success message is a message on which security protection is performed by using the fourth key.

In a possible implementation, the control device is further configured to: after determining that the to-be-upgraded device is successfully upgraded, indicate the communications device to update a rollback file of the upgrade file; and/or after determining that the to-be-upgraded device fails to be upgraded, obtain a rollback file of the upgrade file from the communications device, and send the rollback file to the to-be-upgraded device to perform a rollback operation.

In a possible implementation, the first key and the second key are generated and split by a server, and are sent by the server to the communications device and the control device, respectively. Optionally, after generating the target key, the server sends the target key to the control device or the to-be-upgraded vehicle-mounted device for splitting. For example, the server is an upgrade server, a key server, or another server. In this implementation of the present disclosure, a process of generating the target key and/or splitting the target key may be performed by the server, so that calculation amounts of the control device and the to-be-upgraded device can be reduced, and upgrade efficiency can be improved.

In a possible implementation, the third key and the fourth key are split by a server and then sent to the to-be-upgraded vehicle-mounted device. For example, the server is an upgrade server, a key server, or another server. In this implementation of the present disclosure, generation and/or splitting of the original key corresponding to the third key and the fourth key may be performed by the server, so that calculation amounts of the control device and the to-be-upgraded device can be reduced, and upgrade efficiency can be improved.

According to a third aspect, an implementation of the present disclosure provides a device upgrade system, which may include a control device and a to-be-upgraded device. The control device is configured to receive first upgrade file data sent by the communications device, where the first upgrade file data is upgrade file data generated after the communications device performs first security processing on an upgrade file by using a first key; and perform second security processing on the first upgrade file data by using a second key, to generate second upgrade file data, and send the second upgrade file data to the to-be-upgraded device. The to-be-upgraded device is configured to receive the second upgrade file data, perform security verification on the second upgrade file data by using a third key and a fourth key, and perform upgrade by using the upgrade file if the verification succeeds, where the third key is a verification key matching the first key, and the fourth key is a verification key matching the second key.

In a possible implementation, the first security processing includes: generating a first message authentication code MAC of the upgrade file based on the first key, where the first upgrade file data includes the upgrade file and the first MAC.

In a possible implementation, the second security processing includes: generating a second MAC of the upgrade file based on the second key, and aggregating the first MAC and the second MAC to obtain a third MAC, where the second upgrade file data includes the upgrade file and the third MAC.

In a possible implementation, the second security processing includes: generating a fourth MAC of the first upgrade file data based on the second key, where the second upgrade file data includes the upgrade file and the fourth MAC.

In a possible implementation, the first key and the third key are symmetric keys, and the second key and the fourth key are symmetric keys. The control device is further configured to generate a target key, and split the target key into the first key and the second key; send the target key to the to-be-upgraded device, and send the first key to the communications device; and store the second key, and delete the target key.

In a possible implementation, the first key and the third key are symmetric keys, and the second key and the fourth key are symmetric keys. The to-be-upgraded device is further configured to generate a target key, and split the target key into the first key and the second key; send the first key to the communications device, and send the second key to the control device; and store the target key, and delete the first key and the second key.

In a possible implementation, the to-be-upgraded device is further configured to split the stored target key into the third key and the fourth key before performing the security verification on the second upgrade file data by using the third key and the fourth key.

In a possible implementation, the upgrade file is signed by using a digital signature. The first upgrade file data is upgrade file data generated after the communications device performs the first security processing on the upgrade file by using the first key after obtaining the upgrade file and verifying the digital signature.

In a possible implementation, the upgrade file in the first upgrade file data is further signed by using a digital signature. The control device is further configured to: before performing the second security processing on the first upgrade file data by using the second key, perform signature verification on the digital signature, and perform the second security processing on the first upgrade file data by using the second key if the signature verification succeeds.

In a possible implementation, the to-be-upgraded device is further configured to: after to-be-upgraded device is successfully upgraded based on the upgrade file, send an upgrade success message to the control device, where the upgrade success message is a message on which security protection is performed by using the fourth key.

In a possible implementation, the control device is further configured to: after determining that the to-be-upgraded device is successfully upgraded, indicate the communications device to update a rollback file of the upgrade file; and/or after determining that the to-be-upgraded device fails to be upgraded, obtain a rollback file of the upgrade file from the communications device, and send the rollback file to the to-be-upgraded device to perform a rollback operation.

In a possible implementation, the first key and the second key are generated and split by a server, and are sent by the server to the communications device and the control device, respectively. Optionally, after generating the target key, the server sends the target key to the control device or the to-be-upgraded vehicle-mounted device for splitting. For example, the server is an upgrade server, a key server, or another server. In this implementation of the present disclosure, a process of generating the target key and/or splitting the target key may be performed by the server, so that calculation amounts of the control device and the to-be-upgraded device can be reduced, and upgrade efficiency can be improved.

In a possible implementation, the third key and the fourth key are split by a server and then sent to the to-be-upgraded vehicle-mounted device. For example, the server is an upgrade server, a key server, or another server. In this implementation of the present disclosure, generation and/or splitting of the original key corresponding to the third key and the fourth key may be performed by the server, so that calculation amounts of the control device and the to-be-upgraded device can be reduced, and upgrade efficiency can be improved.

According to a fourth aspect, an implementation of the present disclosure provides a communications device, which may include:
a security processing unit, configured to perform first security processing on an upgrade file by using a first key, to generate first upgrade file data;
a sending unit, configured to send the first upgrade file data to a control device, where
the first upgrade file data is used by the control device to perform second security processing on the first upgrade file data by using a second key, to generate second upgrade file data, and send the second upgrade file data to a to-be-upgraded device; and
the second upgrade file data is used by the to-be-upgraded device to perform security verification on the second upgrade file data by using a third key and a fourth key, and perform upgrade by using the upgrade file if the verification succeeds, where the third key is a verification key matching the first key, and the fourth key is a verification key matching the second key.

In a possible implementation, the first security processing includes: generating a first message authentication code MAC of the upgrade file based on the first key, where the first upgrade file data includes the upgrade file and the first MAC.

In a possible implementation, the second security processing includes: generating a second MAC of the upgrade file based on the second key, and aggregating the first MAC and the second MAC to obtain a third MAC, where the second upgrade file data includes the upgrade file and the third MAC.

In a possible implementation, the second security processing includes: generating a fourth MAC of the first upgrade file data based on the second key, where the second upgrade file data includes the upgrade file and the fourth MAC.

In a possible implementation, the first key and the third key are symmetric keys, the second key and the fourth key are symmetric keys, the first key and the second key are keys obtained after the control device splits a generated target key, the target key is further sent by the control device to the to-be-upgraded device for storage, and the communications device further includes: a receiving unit, configured to receive the first key sent by the control device.

In a possible implementation, the first key and the third key are symmetric keys, the second key and the fourth key are symmetric keys, the first key and the second key are keys obtained after the to-be-upgraded device splits a generated target key, and the communications device further includes: a receiving unit, configured to receive the first key sent by the to-be-upgraded device.

In a possible implementation, the third key and the fourth key are keys obtained after the to-be-upgraded device splits the stored target key before the to-be-upgraded device performs the security verification on the second upgrade file data by using the third key and the fourth key.

In a possible implementation, the upgrade file is signed by using a digital signature. The first upgrade file data is upgrade file data generated after the communications device performs the first security processing on the upgrade file by using the first key after obtaining the upgrade file and verifying the digital signature.

In a possible implementation, the upgrade file is signed by using a digital signature. The security processing unit is specifically configured to obtain the upgrade file, perform signature verification on the digital signature, and perform the first security processing on the upgrade file by using the first key if the signature verification succeeds.

In a possible implementation, the upgrade file in the first upgrade file data is further signed by using a digital signature. The first upgrade file data is specifically used by the control device to perform signature verification on the digital signature, and if the signature verification succeeds, the second security processing is performed on the first upgrade file data by using the second key, to generate the second upgrade file data.

In a possible implementation, the communications device further includes: a first rollback unit, configured to: after the to-be-upgraded device is successfully upgraded, receive an indication that indicates to update a rollback file of the upgrade file and that is sent by the control device; and/or the communications device further includes: a second rollback unit, configured to: after the to-be-upgraded device fails to be upgraded, send a rollback file of the upgrade file to the control device, so that the rollback file is used by the to-be-upgraded device to perform a rollback operation.

In a possible implementation, the first key and the second key are generated and split by a server, and are sent by the server to the communications device and the control device, respectively. Optionally, after generating the target key, the server sends the target key to the control device or the to-be-upgraded vehicle-mounted device for splitting. For example, the server is an upgrade server, a key server, or another server. In this implementation of the present disclosure, a process of generating the target key and/or splitting the target key may be performed by the server, so that calculation amounts of the control device and the to-be-upgraded device can be reduced, and upgrade efficiency can be improved.

In a possible implementation, the third key and the fourth key are split by a server and then sent to the to-be-upgraded vehicle-mounted device. For example, the server is an upgrade server, a key server, or another server. In this implementation of the present disclosure, generation and/or splitting of the original key corresponding to the third key and the fourth key may be performed by the server, so that calculation amounts of the control device and the to-be-upgraded device can be reduced, and upgrade efficiency can be improved.

According to a fifth aspect, an implementation of the present disclosure provides a control device, which may include:
a first receiving unit, configured to receive first upgrade file data sent by a communications device, where the first upgrade file data is upgrade file data generated after the communications device performs first security processing on an upgrade file by using a first key; and
a security processing unit, configured to perform second security processing on the first upgrade file data by using a second key, to generate second upgrade file data, and send the second upgrade file data to a to-be-upgraded device, where
the second upgrade file data is used by the to-be-upgraded device to perform security verification on the second upgrade file data by using a third key and a fourth key, and perform upgrade by using the upgrade file if the verification succeeds, where the third key is a verification key matching the first key, and the fourth key is a verification key matching the second key.

In a possible implementation, the first security processing includes: generating a first message authentication code MAC of the upgrade file based on the first key, where the first upgrade file data includes the upgrade file and the first MAC.

In a possible implementation, the second security processing includes: generating a second MAC of the upgrade file based on the second key, and aggregating the first MAC and the second MAC to obtain a third MAC, where the second upgrade file data includes the upgrade file and the third MAC.

In a possible implementation, the second security processing includes: generating a fourth MAC of the first upgrade file data based on the second key, where the second upgrade file data includes the upgrade file and the fourth MAC.

In a possible implementation, the first key and the third key are symmetric keys, and the second key and the fourth key are symmetric keys. The control device further includes: a key generation unit, configured to generate a target key, and split the target key into the first key and the second key; a sending unit, configured to send the target key to the to-be-upgraded device, and send the first key to the communications device; and a key storage unit, configured to store the second key, and delete the target key.

In a possible implementation, the first key and the third key are symmetric keys, the second key and the fourth key are symmetric keys, the first key and the second key are keys obtained after the to-be-upgraded device splits a generated target key, and the control device further includes: a second receiving unit, configured to receive the second key sent by the to-be-upgraded device.

In a possible implementation, the third key and the fourth key are keys obtained after the to-be-upgraded device splits the stored target key before the to-be-upgraded device performs the security verification on the second upgrade file data.

In a possible implementation, the upgrade file is signed by using a digital signature. The first upgrade file data is upgrade file data generated after the communications device performs the first security processing on the upgrade file by using the first key after obtaining the upgrade file and verifying the digital signature.

In a possible implementation, the upgrade file in the first upgrade file data is further signed by using a digital signature. The security processing unit is specifically configured to: before performing the second security processing on the first upgrade file data by using the second key, perform signature verification on the digital signature, and perform the second security processing on the first upgrade file data by using the second key if the signature verification succeeds.

In a possible implementation, the control device further includes: a third receiving unit, configured to receive an upgrade success message that is sent after the to-be-upgraded device is successfully upgraded based on the upgrade file, where the upgrade success message is a message on which security protection is performed by using the fourth key.

In a possible implementation, the control device further includes: a first rollback unit, configured to: after it is determined that the to-be-upgraded device is successfully upgraded, indicate the communications device to update a rollback file of the upgrade file; and/or the control device further includes: a second rollback unit, configured to: after it is determined that the to-be-upgraded device fails to be upgraded, obtain a rollback file of the upgrade file from the communications device, and send the rollback file to the to-be-upgraded device to perform a rollback operation.

In a possible implementation, the first key and the second key are generated and split by a server, and are sent by the server to the communications device and the control device, respectively. Optionally, after generating the target key, the server sends the target key to the control device or the to-be-upgraded vehicle-mounted device for splitting. For example, the server is an upgrade server, a key server, or another server. In this implementation of the present disclosure, a process of generating the target key and/or splitting the target key may be performed by the server, so that calculation amounts of the control device and the to-be-upgraded device can be reduced, and upgrade efficiency can be improved.

In a possible implementation, the third key and the fourth key are split by a server and then sent to the to-be-upgraded vehicle-mounted device. For example, the server is an upgrade server, a key server, or another server. In this implementation of the present disclosure, generation and/or splitting of the original key corresponding to the third key and the fourth key may be performed by the server, so that calculation amounts of the control device and the to-be-upgraded device can be reduced, and upgrade efficiency can be improved.

According to a sixth aspect, an implementation of the present disclosure provides a to-be-upgraded device, which may include:
a first receiving unit, configured to receive second upgrade file data sent by a control device, where the second upgrade file data is upgrade file data generated after the control device performs, by using a second key, second security processing on first upgrade file data sent by a communications device, and the first upgrade file data is upgrade file data generated after the communications device performs first security processing on an upgrade file by using a first key;
a security verification unit, configured to perform security verification on the second upgrade file data by using a third key and a fourth key, where the third key is a verification key matching the first key, and the fourth key is a verification key matching the second key; and
an upgrade unit, configured to perform upgrade by using the upgrade file if the verification succeeds.

In a possible implementation, the first security processing includes: generating a first message authentication code MAC of the upgrade file based on the first key, where the first upgrade file data includes the upgrade file and the first MAC.

In a possible implementation, the second security processing includes: generating a second MAC of the upgrade file based on the second key, and aggregating the first MAC and the second MAC to obtain a third MAC, where the second upgrade file data includes the upgrade file and the third MAC.

In a possible implementation, the second security processing includes: generating a fourth MAC of the first upgrade file data based on the second key, where the second upgrade file data includes the upgrade file and the fourth MAC.

In a possible implementation, the first key and the third key are symmetric keys, the second key and the fourth key are symmetric keys, the first key and the second key are keys obtained after the control device splits a generated target key, and the to-be-upgraded device further includes: a second receiving unit, configured to receive the target key sent by the control device.

In a possible implementation, the first key and the third key are symmetric keys, and the second key and the fourth key are symmetric keys. The to-be-upgraded device further includes: a first key generation unit, configured to generate a target key, and split the target key into the first key and the second key; a sending unit, configured to send the first key to the communications device, and send the second key to the control device; and a key storage unit, configured to store the target key, and delete the first key and the second key.

In a possible implementation, the to-be-upgraded device further includes: a second key generation unit, configured to split the stored target key into the third key and the fourth key before the security verification is performed on the second upgrade file data by using the third key and the fourth key.

In a possible implementation, the upgrade file is signed by using a digital signature. The first upgrade file data is upgrade file data generated after the communications device performs the first security processing on the upgrade file by using the first key after obtaining the upgrade file and verifying the digital signature.

In a possible implementation, the upgrade file in the first upgrade file data is further signed by using a digital signature. The second upgrade file data is upgrade file data generated after the control device performs the second security processing on the first upgrade file data by using the second key after the control device performs signature verification on the digital signature in the first upgrade file data sent by the communications device and the signature verification succeeds.

In a possible implementation, the to-be-upgraded device further includes: a feedback unit, configured to: after the to-be-upgraded device is successfully upgraded based on the upgrade file, send an upgrade success message to the control device, where the upgrade success message is a message on which security protection is performed by using the fourth key.

In a possible implementation, the to-be-upgraded device further includes: a rollback unit, configured to: after it is determined that the to-be-upgraded device fails to be upgraded, obtain a rollback file of the upgrade file from the control device to perform a rollback operation.

In a possible implementation, the first key and the second key are generated and split by a server, and are sent by the server to the communications device and the control device, respectively. Optionally, after generating the target key, the server sends the target key to the control device or the to-be-upgraded vehicle-mounted device for splitting. For example, the server is an upgrade server, a key server, or another server. In this implementation of the present disclosure, a process of generating the target key and/or splitting the target key may be performed by the server, so that calculation amounts of the control device and the to-be-upgraded device can be reduced, and upgrade efficiency can be improved.

In a possible implementation, the third key and the fourth key are split by a server and then sent to the to-be-upgraded vehicle-mounted device. For example, the server is an upgrade server, a key server, or another server. In this implementation of the present disclosure, generation and/or splitting of the original key corresponding to the third key and the fourth key may be performed by the server, so that calculation amounts of the control device and the to-be-upgraded device can be reduced, and upgrade efficiency can be improved.

According to a seventh aspect, an implementation of the present disclosure provides an intelligent vehicle. The intelligent vehicle may be used in a vehicle-mounted system, and the vehicle-mounted system includes a vehicle-mounted control device and a to-be-upgraded vehicle-mounted device.

The vehicle-mounted control device is configured to receive first upgrade file data sent by a communications device, where the first upgrade file data is upgrade file data generated after the communications device performs first security processing on an upgrade file by using a first key. The vehicle-mounted control device is configured to perform second security processing on the first upgrade file data by using a second key, to generate second upgrade file data, and send the second upgrade file data to the to-be-upgraded vehicle-mounted device. The to-be-upgraded vehicle-mounted device is configured to receive the second upgrade file data, perform security verification on the second upgrade file data by using a third key and a fourth key, and perform upgrade by using the upgrade file if the verification succeeds, where the third key is a verification key matching the first key, and the fourth key is a verification key matching the second key.

In a possible implementation, the first security processing includes: generating a first message authentication code MAC of the upgrade file based on the first key, where the first upgrade file data includes the upgrade file and the first MAC.

In a possible implementation, the second security processing includes: generating a second MAC of the upgrade file based on the second key, and aggregating the first MAC and the second MAC to obtain a third MAC, where the second upgrade file data includes the upgrade file and the third MAC.

In a possible implementation, the second security processing includes: generating a fourth MAC of the first upgrade file data based on the second key, where the second upgrade file data includes the upgrade file and the fourth MAC.

In a possible implementation, the first key and the third key are symmetric keys, and the second key and the fourth key are symmetric keys. The vehicle-mounted control device is further configured to generate a target key, and split the target key into the first key and the second key; send the target key to the to-be-upgraded vehicle-mounted device, and send the first key to the communications device; and store the second key, and delete the target key.

In a possible implementation, the first key and the third key are symmetric keys, and the second key and the fourth key are symmetric keys. The to-be-upgraded vehicle-mounted device is configured to generate a target key, and split the target key into the first key and the second key; send the first key to the communications device, and send the second key to the vehicle-mounted control device; and store the target key, and delete the first key and the second key.

In a possible implementation, the to-be-upgraded vehicle-mounted device is further configured to split the stored target key into the third key and the fourth key before performing the security verification on the second upgrade file data by using the third key and the fourth key.

In a possible implementation, the upgrade file is signed by using a digital signature. The first upgrade file data is upgrade file data generated after the communications device performs the first security processing on the upgrade file by using the first key after obtaining the upgrade file and verifying the digital signature.

In a possible implementation, the upgrade file in the first upgrade file data is further signed by using a digital signature.

The vehicle-mounted control device is further configured to: before performing the second security processing on the first upgrade file data by using the second key, perform signature verification on the digital signature, and perform the second security processing on the first upgrade file data by using the second key if the signature verification succeeds.

In a possible implementation, the to-be-upgraded vehicle-mounted device is further configured to: after to-be-upgraded vehicle-mounted device is successfully upgraded based on the upgrade file, send an upgrade success message to the vehicle-mounted control device, where the upgrade success message is a message on which security protection is performed by using the fourth key.

In a possible implementation, the vehicle-mounted control device is further configured to: after determining that the to-be-upgraded vehicle-mounted device is successfully upgraded, indicate the communications device to update a rollback file of the upgrade file; and/or
the vehicle-mounted control device is further configured to: after determining that the to-be-upgraded vehicle-mounted device fails to be upgraded, obtain a rollback file of the upgrade file from the communications device, and send the rollback file to the to-be-upgraded vehicle-mounted device to perform a rollback operation.

In a possible implementation, the first key and the second key are generated and split by a server, and are sent by the server to the communications device and the vehicle-mounted control device, respectively. Optionally, after generating the target key, the server sends the target key to the vehicle-mounted control device or the to-be-upgraded vehicle-mounted device for splitting. For example, the server is an upgrade server, a key server, or another server. In this implementation of the present disclosure, a process of generating the target key and/or splitting the target key may be performed by the server, so that calculation amounts of the vehicle-mounted control device and the to-be-upgraded vehicle-mounted device can be reduced, and upgrade efficiency can be improved.

In a possible implementation, the third key and the fourth key are split by a server and then sent to the to-be-upgraded vehicle-mounted device. For example, the server is an upgrade server, a key server, or another server. In this implementation of the present disclosure, generation and/or splitting of the original key corresponding to the third key and the fourth key may be performed by the server, so that calculation amounts of the vehicle-mounted control device and the to-be-upgraded vehicle-mounted device can be reduced, and upgrade efficiency can be improved.

According to an eighth aspect, an implementation of the present disclosure provides a vehicle-mounted device upgrade method. The vehicle-mounted device upgrade method may be applied to a vehicle-mounted system, and the vehicle-mounted system includes a vehicle-mounted control device and a to-be-upgraded vehicle-mounted device. The method may include:

The vehicle-mounted control device receives first upgrade file data sent by the communications device, where the first upgrade file data is upgrade file data generated after the communications device performs first security processing on an upgrade file by using a first key.

The vehicle-mounted control device performs second security processing on the first upgrade file data by using a second key, to generate second upgrade file data, and sends the second upgrade file data to the to-be-upgraded vehicle-mounted device.

The to-be-upgraded vehicle-mounted device receives the second upgrade file data, performs security verification on the second upgrade file data by using a third key and a fourth key, and performs upgrade by using the upgrade file if the verification succeeds, where the third key is a verification key matching the first key, and the fourth key is a verification key matching the second key.

In a possible implementation, the first security processing includes: generating a first message authentication code MAC of the upgrade file based on the first key, where the first upgrade file data includes the upgrade file and the first MAC.

In a possible implementation, the second security processing includes: generating a second MAC of the upgrade file based on the second key, and aggregating the first MAC and the second MAC to obtain a third MAC, where the second upgrade file data includes the upgrade file and the third MAC.

In a possible implementation, the second security processing includes: generating a fourth MAC of the first upgrade file data based on the second key, where the second upgrade file data includes the upgrade file and the fourth MAC.

In a possible implementation, the first key and the third key are symmetric keys, the second key and the fourth key are symmetric keys, and the method further includes: The vehicle-mounted control device generates a target key, and splits the target key into the first key and the second key. The vehicle-mounted control device sends the key to the to-be-upgraded vehicle-mounted device, and sends the first key to the communications device. The vehicle-mounted control device stores the second key, and deletes the target key.

In a possible implementation, the first key and the third key are symmetric keys, the second key and the fourth key are symmetric keys, and the method further includes: The to-be-upgraded vehicle-mounted device generates a target key, and splits the target key into the first key and the second key. The to-be-upgraded vehicle-mounted device sends the first key to the communications device, and sends the second key to the vehicle-mounted control device. The to-be-upgraded vehicle-mounted device stores the target key, and deletes the first key and the second key.

In a possible implementation, the method further includes: The to-be-upgraded vehicle-mounted device splits the stored target key into the third key and the fourth key before performing the security verification on the second upgrade file data by using the third key and the fourth key.

In a possible implementation, the upgrade file is signed by using a digital signature. The first upgrade file data is upgrade file data generated after the communications device performs the first security processing on the upgrade file by using the first key after obtaining the upgrade file and verifying the digital signature.

In a possible implementation, the upgrade file in the first upgrade file data is further signed by using a digital signature. Before the vehicle-mounted control device performs the second security processing on the first upgrade file data by using the second key, the method further includes: performing signature verification on the digital signature, and performing the second security processing on the first upgrade file data by using the second key if the signature verification succeeds.

In a possible implementation, the method further includes: After the to-be-upgraded vehicle-mounted device is successfully upgraded based on the upgrade file, the to-be-upgraded vehicle-mounted device sends an upgrade success message to the vehicle-mounted control device, where the upgrade success message is a message on which security protection is performed by using the fourth key.

In a possible implementation, the method further includes: After determining that the to-be-upgraded vehicle-mounted device is successfully upgraded, the vehicle-mounted control device indicates the communications device to update a rollback file of the upgrade file; and/or after determining that the to-be-upgraded vehicle-mounted device fails to be upgraded, the vehicle-mounted control device obtains a rollback file of the upgrade file from the communications device, and sends the rollback file to the to-be-upgraded vehicle-mounted device to perform a rollback operation.

In a possible implementation, the first key and the second key are generated and split by a server, and are sent by the server to the communications device and the vehicle-mounted control device, respectively. Optionally, after generating the target key, the server sends the target key to the vehicle-mounted control device or the to-be-upgraded vehicle-mounted device for splitting. For example, the server is an upgrade server, a key server, or another server. In this implementation of the present disclosure, a process of generating the target key and/or splitting the target key may be performed by the server, so that calculation amounts of the vehicle-mounted control device and the to-be-upgraded vehicle-mounted device can be reduced, and upgrade efficiency can be improved.

In a possible implementation, the third key and the fourth key are split by a server and then sent to the to-be-upgraded vehicle-mounted device. For example, the server is an upgrade server, a key server, or another server. In this implementation of the present disclosure, generation and/or splitting of the original key corresponding to the third key and the fourth key may be performed by the server, so that calculation amounts of the vehicle-mounted control device and the to-be-upgraded vehicle-mounted device can be reduced, and upgrade efficiency can be improved.

According to a ninth aspect, this application provides a device upgrade apparatus. The device upgrade apparatus has a function of implementing any device upgrade method provided in the first aspect. The function may be implemented by hardware, or may be implemented by hardware executing corresponding software. The hardware or the software includes one or more modules corresponding to the function.

According to a tenth aspect, this application provides a vehicle-mounted device upgrade apparatus. The vehicle-mounted device upgrade apparatus has a function of implementing any vehicle-mounted device upgrade method provided in the eighth aspect. The function may be implemented by hardware, or may be implemented by hardware executing corresponding software. The hardware or the software includes one or more modules corresponding to the function.

According to an eleventh aspect, this application provides a control device, and the control device includes a processor. The processor is configured to support the control device in performing a corresponding function in any device upgrade method provided in the first aspect. The control device may further include a memory, and the memory is configured to be coupled to the processor and store program instructions and data that are necessary for the control device. The control device may further include: a communications interface, configured to perform communication between the control device and another device or a communications network.

According to a twelfth aspect, this application provides a vehicle-mounted control device, and the vehicle-mounted control device includes a processor. The processor is configured to support the vehicle-mounted control device in performing a corresponding function in any vehicle-mounted device upgrade method provided in the eighth aspect. The vehicle-mounted control device may further include a memory, and the memory is configured to be coupled to the processor and store program instructions and data that are necessary for the vehicle-mounted control device. The vehicle-mounted control device may further include: a communications interface, configured to perform communication between the vehicle-mounted control device and another device or a communications network.

According to a thirteenth aspect, this application provides a to-be-upgraded device, and the to-be-upgraded device includes a processor. The processor is configured to support the to-be-upgraded device in performing a corresponding function in any device upgrade method provided in the first aspect. The to-be-upgraded device may further include a memory, and the memory is configured to be coupled to the processor, and store program instructions and data that are necessary for the to-be-upgraded device. The to-be-upgraded device may further include: a communications interface, configured to perform communication between the to-be-upgraded device and another device or a communications network.

According to a fourteenth aspect, this application provides a to-be-upgraded vehicle-mounted device, and the to-be-upgraded vehicle-mounted device includes a processor. The processor is configured to support the to-be-upgraded vehicle-mounted device in performing a corresponding function in any vehicle-mounted device upgrade method provided in the first aspect. The to-be-upgraded vehicle-mounted device may further include a memory, and the memory is configured to be coupled to the processor and store program instructions and data that are necessary for the to-be-upgraded vehicle-mounted device. The to-be-upgraded vehicle-mounted device may further include: a communications interface, configured to perform communication between the to-be-upgraded vehicle-mounted device with another device or a communications network.

According to a fifteenth aspect, this application provides a computer storage medium, configured to store computer software instructions used by the control device, the to-be-upgraded device, or the communications device provided in the first aspect. The computer software instructions include a program designed for implementing the foregoing aspect.

According to a sixteenth aspect, this application provides a computer storage medium, configured to store computer software instructions used by the vehicle-mounted control device, the to-be-upgraded vehicle-mounted device, or the communications device provided in the eighth aspect. The computer software instructions include a program designed for implementing the foregoing aspect.

According to a seventeenth aspect, an implementation of the present disclosure provides a computer program. The computer program includes instructions, and when the computer program is executed by a control device, a to-be-upgraded device, or a communications device, the control device, the to-be-upgraded device, or the communications device may perform a procedure performed by the control device, the to-be-upgraded device, or the communications device in any device upgrade method in the first aspect.

According to an eighteenth aspect, an implementation of the present disclosure provides a computer program. The computer program includes instructions, and when the computer program is executed by a vehicle-mounted control device, a to-be-upgraded vehicle-mounted device, or a communications device, the vehicle-mounted control device, the to-be-upgraded vehicle-mounted device, or the communications device may perform a procedure performed by the vehicle-mounted control device, the to-be-upgraded vehicle-mounted device, or the communications device in any vehicle-mounted device upgrade method in the eighth aspect.

According to a nineteenth aspect, this application provides a chip system. The chip system includes a processor, configured to support a control device, a to-be-upgraded device, or a communications device in implementing the functions in the first aspect. In a possible design, the chip system further includes a memory, and the memory is configured to store program instructions and data that are necessary for the control device, the to-be-upgraded device, or the communications device. The chip system may include a chip, or may include a chip and another discrete device.

According to a twentieth aspect, this application provides a chip system. The chip system includes a processor, configured to support a vehicle-mounted control device, a to-be-upgraded vehicle-mounted device, or a communications device in implementing the functions in the first aspect. In a possible design, the chip system further includes a memory, and the memory is configured to store program instructions and data that are necessary for the vehicle-mounted control device, the to-be-upgraded vehicle-mounted device, or the communications device. The chip system may include a chip, or may include a chip and another discrete device.

### BRIEF DESCRIPTION OF DRAWINGS

FIG. 1 is an architectural diagram of an internet of things-based smart household upgrade system according to an implementation of the present disclosure;
FIG. 2 is a schematic diagram of a vehicle-mounted device upgrade application scenario according to an implementation of the present disclosure;
FIG. 3 is a schematic diagram of another vehicle-mounted device upgrade application scenario according to an implementation of the present disclosure;
FIG. 4 is a schematic diagram of a device upgrade system architecture according to an implementation of the present disclosure;
FIG. 5 is a schematic structural diagram of an OTA orchestrator according to an implementation of the present disclosure;
FIG. 6 is a schematic structural diagram of a to-be-upgraded vehicle-mounted device according to an implementation of the present disclosure;
FIG. 7 is a schematic structural diagram of a terminal device according to an implementation of the present disclosure;
FIG. 8 is a schematic diagram of another device upgrade system architecture according to an implementation of the present disclosure;
FIG. 9 is a schematic flowchart of a vehicle-mounted device upgrade method according to an implementation of the present disclosure;
FIG. 10A and FIG. 10B are a schematic flowchart of another vehicle-mounted device upgrade method according to an implementation of the present disclosure;
FIG. 11A and FIG. 11B are a schematic flowchart of still another vehicle-mounted device upgrade method according to an implementation of the present disclosure;
FIG. 12 is a schematic structural diagram of a communications device according to an implementation of the present disclosure;
FIG. 13 is a schematic structural diagram of a control device according to an implementation of the present disclosure.
FIG. 14 is a schematic structural diagram of another control device according to an implementation of the present disclosure.
FIG. 15 is a schematic structural diagram of a to-be-upgraded device according to an implementation of the present disclosure;
FIG. 16 is a schematic structural diagram of another to-be-upgraded device according to an implementation of the present disclosure;
FIG. 17 is a schematic structural diagram of an intelligent vehicle according to an implementation of the present disclosure.
FIG. 18 is a schematic structural diagram of a vehicle-mounted device upgrade system according to an implementation of the present disclosure;
FIG. 19 is a schematic structural diagram of another vehicle-mounted device upgrade system according to an implementation of the present disclosure; and
FIG. 20 is a schematic structural diagram of a device according to an implementation of the present disclosure.

### DESCRIPTION OF IMPLEMENTATIONS

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those which comprise at least all the features of an independent claim. Any implementation which does not fall within the scope of the claims does not form part of the invention, but rather included as an illustrative example that is useful for understanding the invention.

In the specification, claims, and accompanying drawings of this application, the terms "first", "second", "third", "fourth" and the like are intended to distinguish between different objects but do not indicate a particular order. In addition, the terms "including", "having", or any other variant thereof, are intended to cover non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

Mentioning an "implementation" in the specification means that a particular characteristic, structure, or feature described with reference to the implementations may be included in at least one implementation of this application. The phrase shown in various locations in the specification may not necessarily refer to a same implementation, and is not an independent or optional implementation exclusive from another implementation. It is explicitly and implicitly understood by a person skilled in the art that the implementations described in the specification may be combined with another implementation.

Terms such as "component", "module", and "system" used in this specification are used to indicate computer-related entities, hardware, firmware, combinations of hardware and software, software, or software being executed. For example, a component may be, but is not limited to, a process that is run on a processor, a processor, an object, an executable file, an execution thread, a program, and/or a computer. As shown in figures, both a computing device and an application that are run on a computing device may be components. One or more components may reside within a process and/or an execution thread, and the components may be located on one computer and/or distributed between two or more computers. In addition, these components may be executed on various computer-readable media that store various data structures. For example, the components may perform communication by using a local and/or remote process and based on a signal having one or more data packets (for example, data from two components interacting with another component such as the internet interacting with another system by using a signal in a local system, or a distributed system and/or a distributed network).

Some terms in this application are first described, to help a person skilled in the art have a better understanding.
(1) An over-the-air technology (Over the Air Technology, OTA) is a technology of remote upgrade of firmware or software through an air interface of mobile communications.
(2) Telematics (Telematics) is a compound word of telecommunications (Telecommunications) and informatics (Informatics), and may be literally defined as a service system that provides information by using a computer system, a wireless communications technology, a satellite navigation apparatus, and an internet technology for exchanging information such as a text and voice, where the computer system, the wireless communications technology, the satellite navigation apparatus, and the internet technology are built in a transportation vehicle, for example, a vehicle, aircraft, a vessel, or a train. In brief, a vehicle is connected to the internet over a wireless network, to provide a vehicle user with various information necessary for driving or life.
(3) An electronic control unit (Electronic Control Unit, ECU) is a vehicle-specific microcomputer controller from a perspective of usage. Like a common computer, the electronic control unit includes large-scale integrated circuits such as a microprocessor (CPU), a memory (ROM or RAM), an input/output interface (I/O), an analog-to-digital converter (A/D), a shaper, and a drive.
(4) A vehicle control unit (Vehicle Control Unit, VCU) may also be referred to as a vehicle control unit of an electric vehicle.

The VCU is a main controller of a power system of the electric vehicle, is responsible for coordinating operation of various components such as an engine, a drive motor, a gearbox, and a power battery, and has functions of improving power performance, security performance, and economic performance of a vehicle. The VCU is a core component of a control system of the entire electric vehicle, and is a core control device configured to control start, operation, drive and reverse, speed, and stop of a motor of the electric vehicle and control another electronic device of the electric vehicle. As a core component of a control system of a pure electric vehicle, the VCU is responsible for data exchange, security management, driver intention interpretation, and power stream management. The VCU collects a motor control system signal, an accelerator pedal signal, a brake pedal signal, and a signal of another component, comprehensively analyzes a driving intention of a driver and perform determining as a response, and monitors actions of controllers of lower-layer components. The VCU plays a critical role in functions such as normal driving of a vehicle, battery power braking and regeneration, network management, fault diagnosis and processing, and vehicle status monitoring.

(5) A controller area network (Controller Area Network, CAN) bus is one of the most widely used field buses in the world. High reliability and a sound error detection capability of the CAN bus receive much attention, and therefore the CAN bus is widely used in a vehicle computer control system and an industry environment with a poor ambient temperature, strong electromagnetic radiation, and intense vibration. The CAN bus is a widely used field bus and has a great application prospect in industry detection and control, industrial automation, and other fields. A CAN is a serial communications bus network, and has advantages of reliability, real time, and flexibility in data communication.

(6) A message authentication code (Message Authentication Code, MAC) is an authentication mechanism used by both communications entities, and is a tool for ensuring data integrity of a message. The MAC is similar to a digest algorithm, but a key is further used for computation of the MAC. Therefore, the MAC is a value obtained based on a key and a message digest. Actually, the MAC generates redundant information for a message, and the redundant information may be used for data source authentication and integrity check.

(7) A key derivation function (Key Derivation Function, KDF) is a key derivation function used during encryption and decryption. The key derivation function is used to generate key data from a shared secret bit serial port. During key negotiation, the key derivation function works on a secret bit string obtained in key exchange, to generate a required session key or key data required for further encryption.

(8) A public key password (asymmetrical password) is also referred to as an asymmetrical password. An asymmetrical key algorithm means that an encryption key and a decryption key of an encryption algorithm are different, or one key cannot be deduced from the other key. A user who has a public key password has an encryption key and a decryption key. The decryption key cannot be obtained by using the encryption key. In addition, the encryption key is public. The public key password is designed based on this principle, to use assistance information (trapdoor information) as a privacy key. Security strength of this password depends on computation complexity of a problem on which the password is based. Currently, common public key passwords include an RSA public key password, an El Gamal public key password, and an elliptic curve password.

(9) Symmetric password: Symmetric key encryption is also referred to as dedicated key encryption. To be specific, a data sender and a data receiver necessarily use a same key to perform encryption and decryption operation on a plaintext. In other words, an encryption key can be deduced from a decryption key, and a decryption key can be deduced from an encryption key. In most symmetric algorithms, an encryption key is the same as a decryption key. These algorithms are also referred to as privacy key algorithms or single key algorithms, and require a sender and a receiver to agree on a key before secure communication. Security of a symmetric algorithm depends on a key. If the key is leaked, anyone can encrypt or decrypt a message. The key needs to keep confidential provided that communication requires confidentiality.

It can be learned from the description of the symmetric key algorithm and the description of the asymmetric key algorithm that a same key is used for symmetric key encryption and decryption, or a decryption key can be easily deduced from an encryption key. The symmetric key algorithm has features such as simple encryption processing, fast encryption and decryption speed, a short key length, and a long development history. The asymmetric key algorithm has features such as slow encryption and decryption speed, a long key length, and a relatively short development history.

(10) The transport layer security (Transport Layer Security, TLS) protocol is used to provide confidentiality and data integrity between two application programs. The protocol includes two layers: the TLS record (TLS Record) protocol and the TLS handshake (TLS Handshake) protocol. The transport layer security (TLS) protocol is used to ensure confidentiality and data integrity between two communications application programs.

(11) A cryptographic hash function (Cryptographic hash function), also translated as cryptographic hash function, is a type of hash function. The cryptographic hash function is considered as a one-way function, meaning that it is very difficult to derive input data from a result output by the hash function. Such a one-way function is referred to as a "workhorse of the modern cryptology". The input data of this hash function is usually referred to as a message (message), and the output result of the hash function is usually referred to as a message digest (message digest) or a digest (digest). In information security, many important applications such as a digital signature and a message authentication code are implemented by using the cryptographic hash function.

(12) A terminal device may be user equipment (User Equipment, UE), a station (STATION, ST) in a wireless local area network (Wireless Local Area Networks, WLAN), a cellular phone, a wireless local loop (Wireless Local Loop, WLL) station, a personal digital assistant (Personal Digital Assistant, PDA) device, a handheld device or a computing device having a wireless communications function, another processing device or a wearable device connected to a wireless modem, or the like.

To facilitate understanding of the implementations of the present disclosure, the following lists, as examples, scenarios of a device upgrade system to which a device upgrade method in this application is applied. The following three scenarios may be included.

Scenario 1: Upgrade management is performed on a smart household by using a communications device.

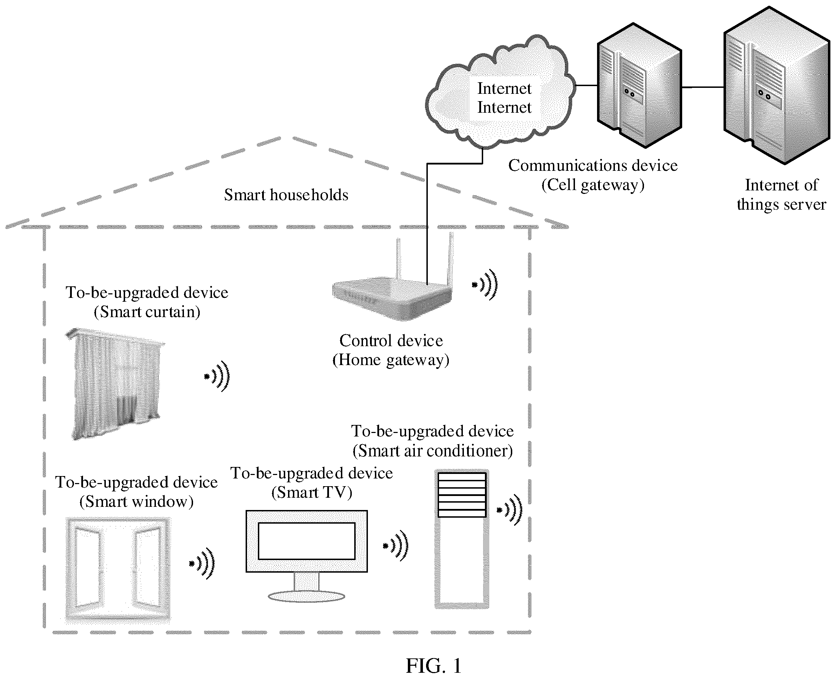

FIG. 1 is an architectural diagram of an internet of things-based smart household upgrade system according to an implementation of the present disclosure. The application scenario includes an upgrade server (an internet of things server is used as an example in FIG. 1), a communications device (a cell gateway is used as an example in FIG. 1), a control device (a home gateway is used as an example in FIG. 1), and a plurality of to-be-upgraded devices (a smart curtain, a smart window, a smart television, and a smart air conditioner are used as examples in FIG. 1). The home gateway may communicate with the smart curtain, the smart window, the smart television, the smart air conditioner through wireless communications such as Bluetooth, NFC, Wi-Fi, or a mobile network. The home gateway accesses the cell gateway and the internet of things server over the internet. When the internet of things server has an upgrade file for upgrading any one of the foregoing smart households, the cell gateway downloads the upgrade file from the internet of things server. The cell gateway and the home gateway use a device upgrade method provided in this application, first security processing is completed on the cell gateway, and second security processing is completed on the home gateway. Finally, the security-protected upgrade file is sent to the to-be-upgraded smart household to complete secure upgrade.

Scenario 2: One-to-one management is performed on an intelligent vehicle by using a communications device.

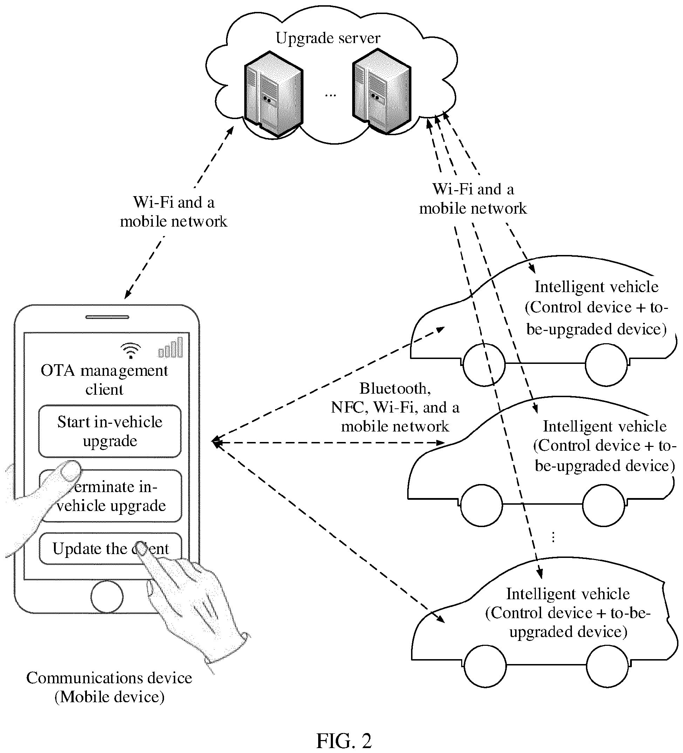

FIG. 2 is a schematic diagram of a vehicle-mounted device upgrade application scenario according to an implementation of the present disclosure. The application scenario includes a communications device (a terminal device such as a smartphone is used as an example in FIG. 1), intelligent vehicles, and an upgrade server. The smartphone and the intelligent vehicle may communicate with each other through Bluetooth, NFC, Wi-Fi, a mobile network, and the like. A one-to-one matching relationship may be established between the smartphone and the intelligent vehicle. For example, a license plate or a unique identifier of the intelligent vehicle matches an identity card or an authorized account of the terminal device. After the matching, the smartphone and the intelligent vehicle may cooperatively perform a procedure of the device upgrade method provided in this application, so that a user can perform upgrade management on the driven vehicle by using the smartphone, to ensure upgrade security of the vehicle. In another possible scenario, a one-to-many matching relationship may be established between the smartphone and the intelligent vehicles. For example, one user may own and manage a plurality of vehicles at the same time, or one user may manage vehicles of a plurality of different users. For example, an employee in a 4S shop uses a dedicated terminal device to upgrade systems of all vehicles of a same model in the shop, or a user uses a terminal device of the user to provide or manage upgrade packages for nearby smart vehicles that have a matching relationship with the terminal device of the user, to implement an application scenario in which one device manages a plurality of smart vehicles at the same time. This reduces time, and saves network transmission bandwidth and storage resources, and ensures upgrade security of the vehicles. It may be understood that, in one-to-many management, the terminal device needs to prestore related information of the plurality of vehicles, or the plurality of vehicles need to prove, to the terminal device, authorization of the plurality of vehicles and a service relationship between the plurality of vehicles and the terminal device.

Scenario 3: A communications device is a server, and one-to-many management is performed on intelligent vehicles by using the server.

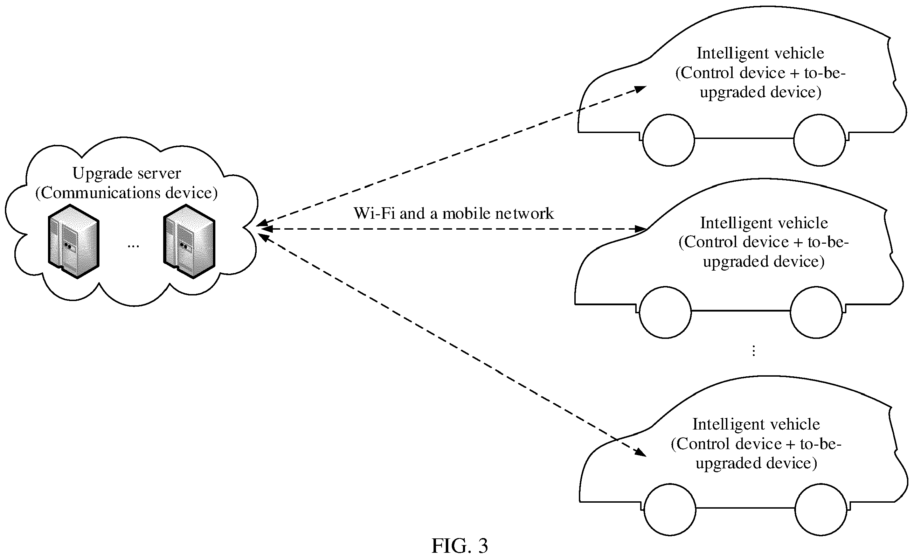

FIG. 3 is a schematic diagram of another vehicle-mounted device upgrade application scenario according to an implementation of the present disclosure. The application scenario includes intelligent vehicles and an upgrade server. The upgrade server may communicate with the intelligent vehicles through Wi-Fi, a mobile network, and the like. The upgrade server may perform upgrade management on a plurality of legally registered intelligent vehicles, and in addition to a related service such as providing an upgrade package or downloading and updating an upgrade package, the upgrade server may further serve as a communications device in this application to cooperate with the intelligent vehicle to perform a procedure of a vehicle-mounted device upgrade method provided in this application. For example, a logical functional entity is newly added to the upgrade server, and the logical functional entity is configured to store a first key, and perform first security processing, to perform security enhancement on intra-vehicle storage or transmission of an upgrade file, thereby ensuring upgrade security of the vehicle.

It may be understood that the application scenarios in FIG. 1, FIG. 2, and FIG. 3 are merely several example implementations in the implementations of the present disclosure, and the application scenarios in the implementations of the present disclosure include but are not limited to the foregoing application scenarios. The device upgrade method in this application may be further applied to scenarios such as a scenario in which a host manages system upgrade of a virtual machine, a scenario in which a router manages batch system upgrade of terminals, a scenario in which a smartphone manages device upgrade of an intelligent wearable device, a scenario in which a smart medical management device manages device upgrade of an intelligent medical device, and a scenario in which a factory management and control device manages device upgrade of an intelligent machine. Other scenarios and examples are not listed and described one by one.

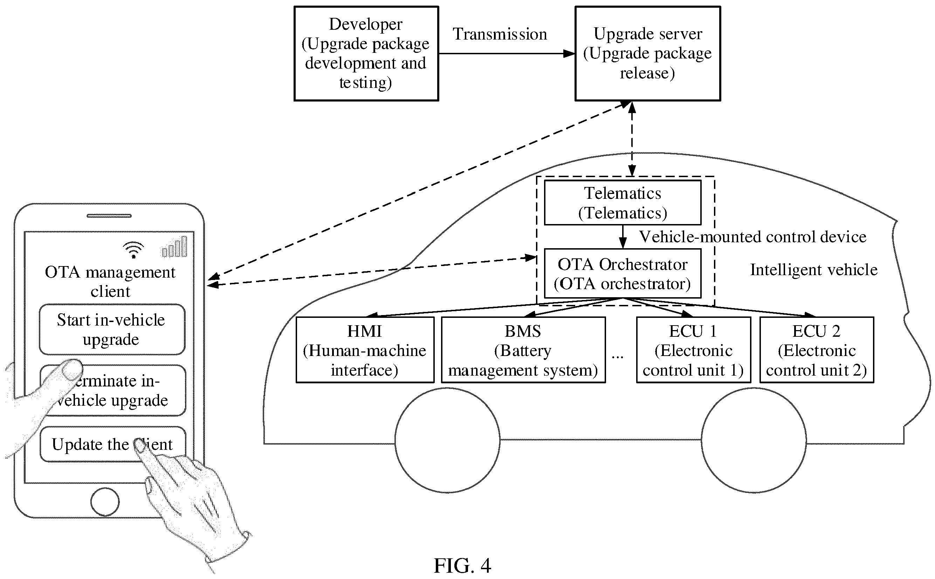

With reference to the foregoing application scenarios, the following first describes a device upgrade system architecture on which the implementations of the present disclosure are based. FIG. 4 is a schematic diagram of a device upgrade system architecture (an architecture 1 for short) according to an implementation of the present disclosure. The device upgrade method provided in this application may be applied to the system architecture. The system architecture includes an upgrade server, an intelligent vehicle, and a communications device (FIG. 4 uses an example in which the communications device is a terminal device such as a smartphone). The intelligent vehicle includes a vehicle-mounted control device and one or more to-be-upgraded vehicle-mounted devices, for example, an HMI (human-machine interface), a BMS (battery management system), an electronic control unit 1, ECU 1, and an electronic control unit 2, ECU 2. The vehicle-mounted control device may include a telematics (Telematics) unit and an OTA orchestrator (OTA Orchestrator) that are configured to manage and assist in upgrade of a plurality of to-be-upgraded vehicle-mounted devices. In the foregoing system architecture, vehicle-mounted device remote upgrade may include the following basic processes: upgrade package release, upgrade package obtaining, intra-vehicle transmission of an upgrade package, and upgrade and confirmation.

The upgrade server may be configured to obtain an unencrypted vehicle-mounted upgrade package from a developer. The vehicle-mounted upgrade package includes an upgrade file in this application, and the upgrade file may be used to upgrade a corresponding to-be-upgraded vehicle-mounted device.

The communications device in this application may be a terminal device, and is responsible for communicating with the upgrade server, obtaining the vehicle-mounted upgrade package, and participating in storing a first key, performing first security processing, and generating first upgrade file data by using a storage capability and a computing capability of the communications device, to implement computing extension and security enhancement. Further, the communications device is further configured to participate in a secure upgrade process of the intelligent vehicle from perspectives such as resource extension and upgrade control. For example, the communications device assists, based on the storage capability of the communications device, in storing an intermediate file (for example, software/firmware information, a current version, a size, and a developer of each to-be-upgraded vehicle-mounted device), a backup file (for example, a software/firmware rollback version for the to-be-upgraded vehicle-mounted device), and a status of an in-car infotainment system, to complete storage extension. When the communications device is a terminal device, the communications device may be further used as a remote control console end for software/firmware upgrade (a user may choose whether to perform upgrade, an upgrade time, a single-point upgrade mode, a group upgrade mode, or the like), to implement remote control of upgrade by the user.

The telematics in the vehicle-mounted control device is responsible for external communication, for example, communication with the communications device and communication with the upgrade server, and some transmission actions of the vehicle-mounted upgrade package (sending to the OTA orchestrator).

The OTA orchestrator in the vehicle-mounted control device is responsible for communication with the to-be-upgraded vehicle-mounted device. A main function of the OTA orchestrator is to manage and assist in upgrade of the vehicle-mounted device. Specifically, the OTA orchestrator may have the following functions: key distribution and management (for example, generating a target key, and splitting the target key to generate a first key and a second key), managing an OTA process, jointly sharing, together with the communications device, an operation with a large calculation amount of a resource-constraint to-be-upgraded vehicle-mounted device, for example, verifying a digital signature of an upgrade package, and jointly using, together with the communications device, as backup points of a resource-constraint to-be-upgraded vehicle-mounted device, to facilitate rollback when the upgrade fails. The OTA orchestrator is a logical entity that can be physically deployed on any powerful unit or module, for example, telematics, a gateway, and a VCU.

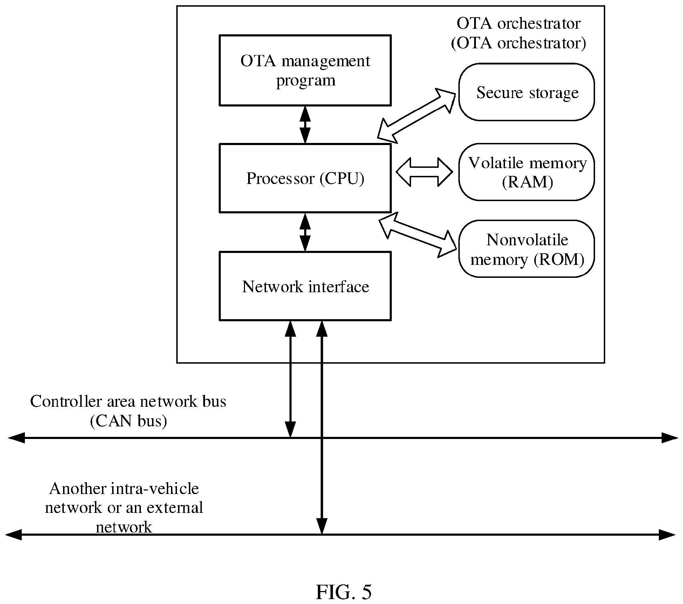

The structure of the OTA orchestrator may be shown in FIG. 5. FIG. 5 is a schematic structural diagram of an OTA orchestrator according to an implementation of the present disclosure. The OTA orchestrator may include a processor CPU; a related volatile memory RAM and non-volatile memory ROM; a secure storage configured to store a key, such as, a static key (a first key and a second key in this application) shared with the to-be-upgraded vehicle-mounted device; a memory configured to store an OTA management program, where the OTA management program is used to manage an upgrade process; and a network interface used to communicate with another vehicle-mounted device through a CAN bus or another intra-vehicle network. It can be understood that, if the OTA orchestrator is implemented on the telematics, the OTA orchestrator further requires a network interface to communicate with an external network. To be specific, the OTA orchestrator needs to have a relatively strong computing capability and a relatively large quantity of resources, to assist a vehicle-mounted device in completing remote upgrade, and to be trusted by another vehicle-mounted device. In terms of logical architecture division, the OTA orchestrator divides the architecture into an out-of-vehicle communication part and an intra-vehicle communication part. Devices in the intra-vehicle communication part only need to perform an operation related to a symmetric password rather than an operation related to a public key password. If there is an operation related to a public key password, the OTA orchestrator performs the operation, to reduce a computation amount and computation complexity for the to-be-upgraded device in the vehicle.

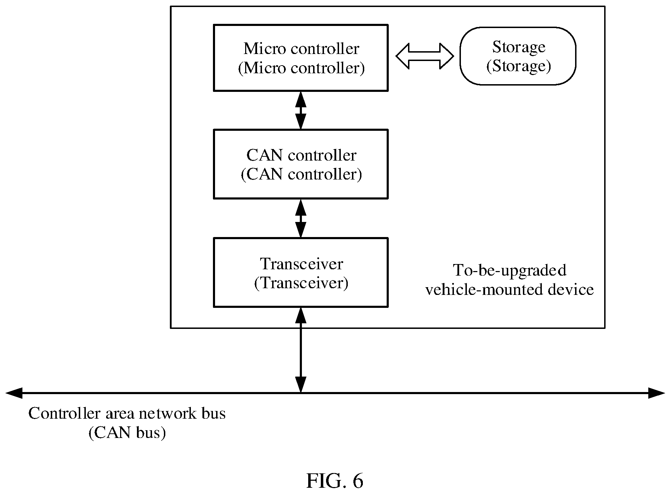

For the to-be-upgraded vehicle-mounted device, composition of any to-be-upgraded vehicle-mounted device (including the to-be-upgraded vehicle-mounted device in this application) in an intelligent vehicle may be shown in FIG. 6. FIG. 6 is a schematic structural diagram of a to-be-upgraded vehicle-mounted device according to an implementation of the present disclosure. The to-be-upgraded vehicle-mounted device may include a micro controller (Micro controller), a CAN controller (CAN controller), and a transceiver (Transceiver). The to-be-upgraded vehicle-mounted device communicates with an intra-vehicle network such as a CAN bus via the transceiver (Transceiver). The CAN controller is configured to implement a CAN protocol. The micro controller is configured to implement related computation processing before and after upgrade, for example, may implement a vehicle-mounted device upgrade method performed by the to-be-upgraded vehicle-mounted device in this application. With reference to the foregoing schematic structural diagram, in this application, the to-be-upgraded vehicle-mounted device receives, based on the intra-vehicle network such as the CAN bus by using the transceiver (Transceiver), second upgrade file data sent by the vehicle-mounted control device, and performs security verification on the second upgrade file data based on a third key and a fourth key by using the micro controller (Micro Controller), to perform secure upgrade. Optionally, the to-be-upgraded vehicle-mounted device may also implement functions such as generating the target key by using the micro controller (Micro Controller), and splitting the target key into the first key and the second key. For more specific functions, refer to descriptions of functions related to the to-be-upgraded vehicle-mounted device in subsequent implementations.

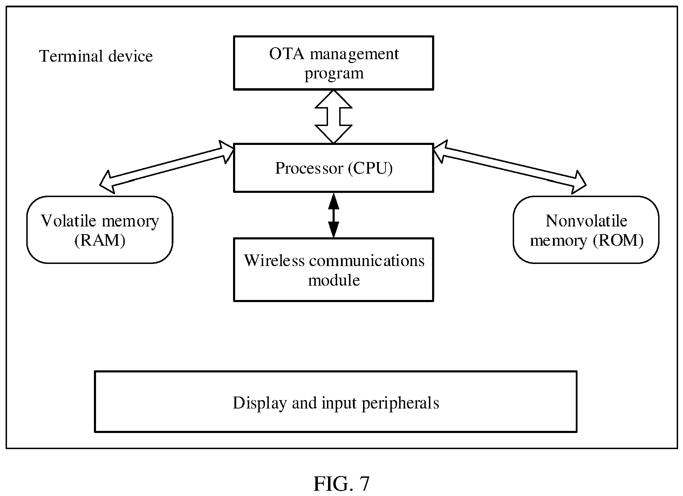

When the communications device is a terminal device, for composition of the terminal device, refer to FIG. 7. FIG. 7 is a schematic structural diagram of a terminal device according to an implementation of the present disclosure. The terminal device may include a processor CPU; a related volatile memory RAM and nonvolatile memory ROM; a memory, configured to store an OTA management program, where the OTA management program is used to manage a device upgrade process; a wireless communications module, configured to communicate with another device (including an intelligent vehicle, an upgrade server, and the like); and display and input peripherals, for example, an audio input and output module, a key or touch input module, and a display, configured to provide a vehicle-mounted upgrade interaction control interface for a user. It should be noted that, when the communications device is a server and the server and the upgrade server in this application are located on a same physical entity, the upgrade server may include a logical functional entity for implementing functions implemented by the communications device. Therefore, a specific actual structure of the communications device is not specifically limited in this application. In addition, when the communications device is a terminal device, the communications device may correspond to the application scenario in FIG. 2. When the communications device is a server, the communications device may correspond to the application scenario in FIG. 3.

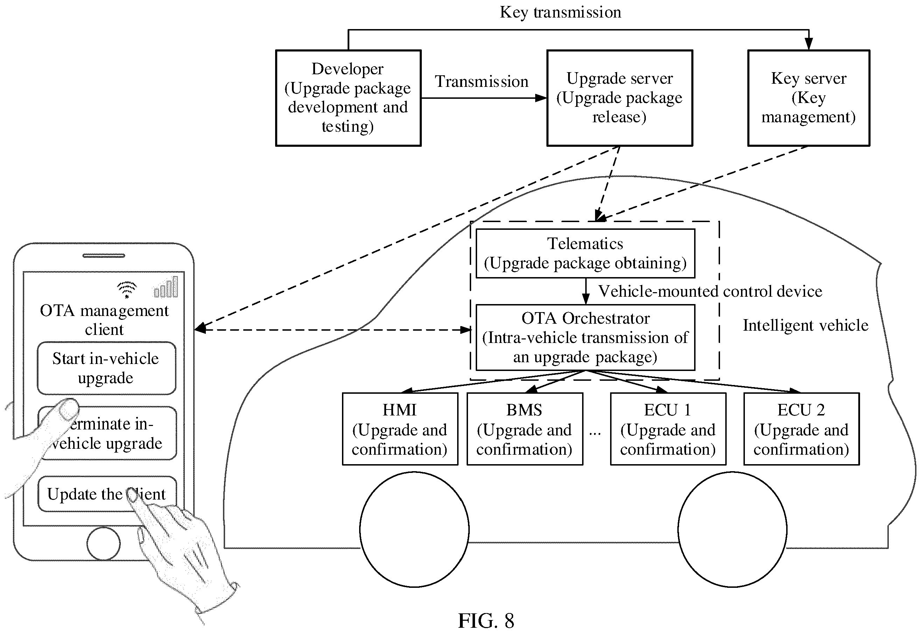

Optionally, a vehicle-mounted system upgrade architecture in this application may further include a developer. After developing and testing an upgrade program (firmware/software), the developer delivers the vehicle-mounted upgrade package to the upgrade server, and the delivered vehicle-mounted upgrade package needs to be signed by using a digital signature. Optionally, before being signed by using the digital signature, the vehicle-mounted upgrade package may be further encrypted. If the vehicle-mounted upgrade package is encrypted, the system architecture may further include a key server. FIG. 8 is a schematic diagram of another device upgrade system architecture (an architecture 2 for short) according to an implementation of the present disclosure. The system architecture further includes a key server. The key server may be configured to generate a key used between the upgrade server and the developer; may also generate a public-private key pair for signature and signature verification between the upgrade server and the communications device or the vehicle-mounted control device; and further, optionally, may also participate in generating a target key, a first key, a second key, and the like in the implementations of the present disclosure. This is not specifically limited in the implementations of the present disclosure.

It may be understood that the device upgrade system architectures in FIG. 4 and FIG. 8 are merely two examples of implementations in the implementations of the present disclosure, and the device upgrade system architectures in the implementations of the present disclosure include but are not limited to the foregoing device upgrade system architectures.

With reference to the foregoing application scenarios, the system architectures, and the device upgrade method provided in this application, the following specifically analyzes and resolves the technical problem proposed in this application by using an example in which an upgrade device is an intelligent vehicle/vehicle-mounted system.

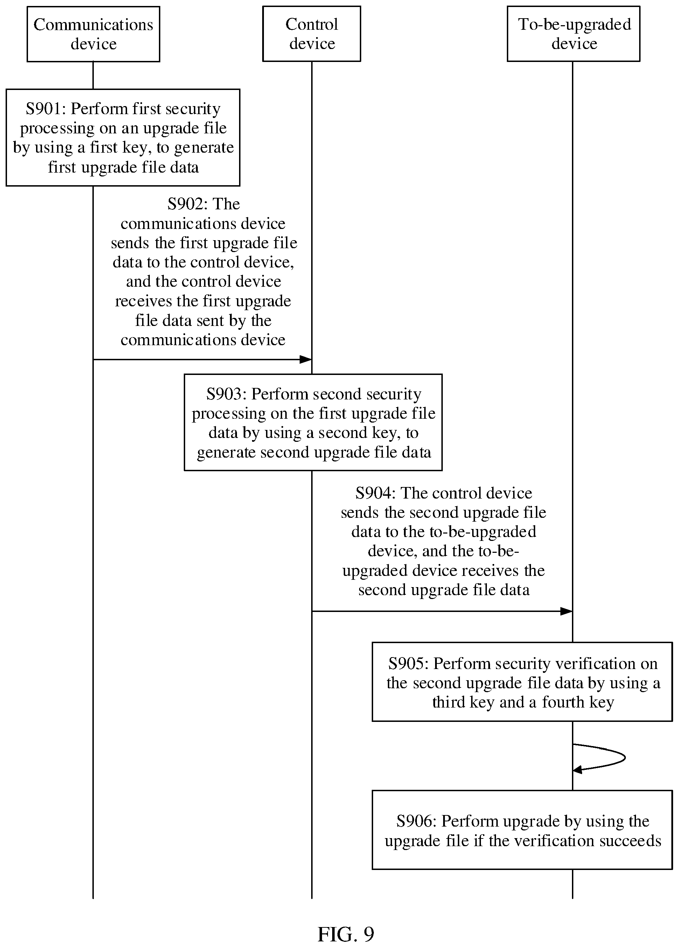

FIG. 9 is a schematic flowchart of a device upgrade method according to an implementation of the present disclosure. The device upgrade method may be applied to the system architecture 1 or the system architecture 2, and is applicable to any application scenario in FIG. 1, FIG. 2, or FIG. 3. The following provides description from the perspective of interaction of a communications device, a control device, and a to-be-upgraded device with reference to FIG. 9. The method may include steps S901 to S906.

Step S901: The communications device performs first security processing on an upgrade file by using a first key, to generate first upgrade file data.

Step S902: The communications device sends the first upgrade file data to the control device. The control device receives the first upgrade file data sent by the communications device.

Step S903: The control device performs second security processing on the first upgrade file data by using a second key, to generate second upgrade file data.

Step S904: The control device sends the second upgrade file data to the to-be-upgraded device. The to-be-upgraded device receives the second upgrade file data.

Step S905: The to-be-upgraded device performs security verification on the second upgrade file data by using a third key and a fourth key.

Step S906: If the verification succeeds, the to-be-upgraded device performs upgrade by using the upgrade file, where the third key is a verification key matching the first key, and the fourth key is a verification key matching the second key.

Specifically, an upgrade scenario in an intelligent vehicle/vehicle-mounted system is mainly used as an example for description below. To be specific, the control device and the to-be-upgraded device may be a vehicle-mounted control device and a to-be-upgraded vehicle-mounted device in the intelligent vehicle/vehicle-mounted system. The upgrade file may be a system upgrade file, a system patch, system synchronization information, or the like of any to-be-upgraded vehicle-mounted device in the intelligent vehicle, and is used to provide a service such as system upgrade, maintenance, or update for a corresponding to-be-upgraded vehicle-mounted device. For example, after an upgrade program developer completes testing, an upgrade package of the intelligent vehicle is released by an upgrade server. The upgrade package may include upgrade packages of a plurality of to-be-upgraded vehicle-mounted devices. For a to-be-upgraded vehicle-mounted device, a complete upgrade package may be in the following format: [MetaD, M, σ], where MetaD is metadata (metadata) of the upgrade package, and may include an upgrade object (for example, a specific model of the to-upgraded vehicle-mounted device), an upgrade file type (for example, \delta,complete), current version information, historical version information, operating system information, and the like; M is a file used to perform upgrade; and σ = Sign(MetaD||M) is a digital signature signed on MetaD and M (denoted as MetaD||M), and may be provided by a developer or the upgrade server by using an upgrade program. Optionally, the upgrade file may be MetaD||M. Further, optionally, the upgrade file, namely, the upgrade file [MetaD,M,σ] that carries the digital signature, may be signed by using a digital signature,. In this implementation of the present disclosure, that the communications device performs the first security processing on the upgrade file by using the first key may be: performing the first security processing on the upgrade file MetaD||M. If the upgrade file is signed by using the digital signature, the communications device needs to first perform signature verification on the digital signature σ in [MetaD,M,σ], and performs the first security processing on MetaD||M if the signature verification succeeds. That is, regardless of whether the upgrade file is signed by using the digital signature or is under other security protection, the upgrade file on which the first security processing in this implementation of the present disclosure is performed may be the upgrade file, and does not include the signature information or protection information. Further, optionally, the communications device may send the digital signature σ and the first upgrade file data together to the vehicle-mounted control device, so that the vehicle-mounted control device first verifies, before performing the second security processing on the first upgrade file data, whether the upgrade file in the first upgrade file data is secure and authorized. If the upgrade file in the first upgrade file data is secure and authorized, the vehicle-mounted control device continues to perform the second security processing. If the upgrade file in the first upgrade file data is not secure or authorized, the upgrade process is canceled. In a possible implementation, both the communications device and the vehicle-mounted control device in this implementation of the present disclosure may determine, by using the upgrade object (for example, the specific model of the to-be-upgraded vehicle-mounted device) in MetaD in the upgrade file, a to-be-upgraded vehicle-mounted device to which the upgrade file is specific, so that the communications device uses the first key that matches the to-be-upgraded vehicle-mounted device, and the vehicle-mounted control device uses the second key that matches the to-be-upgraded vehicle-mounted device and sends the second upgrade file data to the corresponding to-be-upgraded vehicle-mounted device.

In steps S901 to S903, the first key stored and used by the communications device and the second key stored and used by the vehicle-mounted control device may be split from a target key generated inside the intelligent vehicle, or may be two keys initially generated inside the intelligent vehicle. Optionally, the first key and the second key may also be split from a target key generated by a related server (for example, an upgrade server, a key server, or another server), and then sent to corresponding devices. Alternatively, a related server may generate a target key and then send the target key to the vehicle-mounted control device or the to-be-upgraded vehicle-mounted device for splitting. Regardless of whether the first key and the second key are obtained through splitting or initially generated, the first key and the second key each are used as a part of a complete key to jointly participate in a security processing process between the vehicle-mounted control device and the to-be-upgraded vehicle-mounted device. If an attacker obtains only the first key or the second key, the attacker cannot forge or tamper with the upgrade file. Therefore, the communications device performs the first security processing on the upgrade file by using a partial key, namely, the first key, of the complete key, to generate the first upgrade file data, and sends the first upgrade file data to the vehicle-mounted control device. A purpose is to generate partial verification information, namely, a part of complete verification information, of the upgrade file by using the partial key, so that the vehicle-mounted control device can generate the complete verification information without obtaining a complete key through key restoration by using the first key and the second key. This avoids a case in which the complete key is easily stolen or tampered with because the first key and the second key appear on the vehicle-mounted control device in a plaintext form at the same time. The vehicle-mounted control device performs the second security processing on the first upgrade file data by using the second key. A purpose is to use, as partial verification information in the second upgrade file data, the first upgrade file data on which the security processing has been performed by using the first key. Further security processing is performed on the partial verification information and the upgrade file by using the second key, and the partial verification information and the upgrade file are finally sent to the to-be-upgraded vehicle-mounted device. In this way, the security of the upgrade file can be verified after the to-be-upgraded vehicle-mounted device performs security verification by using verification keys that match the first key and the second key, respectively.

The first security processing may be generating a message authentication code MAC of the upgrade file by using the first key, or may be generating a digital signature, encrypting the upgrade file, or the like by using the first key. The second security processing may be generating a MAC of the first upgrade file data by using the second key, or may be generating a digital signature of the first upgrade file data, encrypting the first upgrade file data, or the like by using the second key. To be specific, different security processing manners may be set for specific manners of the first security processing and the second security processing according to an actual secure transmission requirement between the vehicle-mounted control device and the to-be-upgraded vehicle-mounted device. This is not specifically limited in this implementation of the present disclosure. For example, when integrity and source authenticity of the upgrade file need to be ensured, a security processing manner may be generating a MAC. When integrity, source authenticity, and non-repudiation of the upgrade file need to be ensured, a security processing manner may be generating a digital signature. When confidentiality of the upgrade file needs to be ensured, a security processing manner may be symmetric encryption or asymmetric encryption. Optionally, the first security processing and the second security processing may be any combination of the foregoing manners. For example, the first security processing may be generating a MAC of the upgrade file by using the first key, and the second security processing is generating a MAC of the first upgrade file data by using the second key. In this way, integrity and source authenticity of the upgrade file transmitted inside the intelligent vehicle are ensured. For another example, the first security processing is generating a MAC of the upgrade file by using the first key, and the second security processing is encrypting the first upgrade file data by using the second key. In this way, integrity, source authenticity, and confidentiality of the upgrade file transmitted inside the intelligent vehicle are ensured.

In steps S904 to S906, the to-be-upgraded vehicle-mounted device performs the security verification on the second upgrade file data by using the third key that matches the first key and the fourth key that matches the second key. This is because the second upgrade file data is essentially an upgrade file on which security processing is performed twice by using the first key and the second key. Correspondingly, the to-be-upgraded vehicle-mounted device also needs to perform verification twice to verify security of the second upgrade file data. Optionally, the to-be-upgraded vehicle-mounted device may prestore the third key and the fourth key, or may store a target key from which the third key and the fourth key are split (a prerequisite is that the first key and the second key are also split from a key that matches the target key), and the target key is split when required. Optionally, the third key and the fourth key may alternatively be split by a related server (for example, an upgrade server, a key server, or another server), and then sent to the to-be-upgraded vehicle-mounted device. In addition, it may be understood that the vehicle-mounted control device and the to-be-upgraded vehicle-mounted device need to negotiate in advance a security processing manner, namely, a corresponding verification manner. In addition, a relationship between the first key and the third key and a relationship between the second key and the fourth key depend on specific manners of the first security processing and the second security processing. For example, when the first security processing is generating a MAC, the first key and the third key are symmetric keys, in other words, the first key and the third key are the same. When the first security processing is generating a digital signature, the first key and the second key are asymmetric keys, in other words, the first key and the third key are a public-private key pair. When the first security processing is encryption, the first key and the third key may be symmetric keys or asymmetric keys. Likewise, a relationship between the third key and the fourth key is also related to a specific manner of the second security processing. Details are not described herein again.

It should be noted that in this implementation of the present disclosure, different to-be-upgraded vehicle-mounted devices correspond to different complete keys (namely, the first key and the second key). In addition, when one to-be-upgraded vehicle-mounted device correspond to a plurality of upgrade files (for example, when different function modules are to be upgraded), complete keys corresponding to different upgrade files may be the same or may be different. This is not specifically limited in this implementation of the present disclosure. It should be further noted that when the communications device is a terminal device, a matching relationship needs to be established between the terminal device and the intelligent vehicle. If the communications device is an upgrade server, the server may be an upgrade server that provides an upgrade file for the intelligent vehicle.

In this implementation of the present disclosure, a part of keys that are used by the vehicle-mounted control device in the intelligent vehicle to perform secure transmission between the vehicle-mounted control device and the to-be-upgraded vehicle-mounted device (different to-be-upgraded vehicle-mounted devices correspond to different keys) is stored on the communications device outside a device upgrade system, to avoid that the keys are stored in a complete form on the vehicle-mounted control device and are easily stolen or tampered with by an attacker. Besides, because the communications device is also a sender that transmits the upgrade file to the device upgrade system, in addition to storing the part of the keys, when sending the upgrade file to the vehicle-mounted control device, the communications device may further perform the first security processing on the upgrade file by using the stored part (namely, the first key) of the keys, and then send the upgrade file to the vehicle-mounted control device, so that the vehicle-mounted control device can perform further security processing by using the other part (namely, the second key) of the keys. Finally, the upgrade file on which security processing is performed by using the first key and the second key is sent to the to-be-upgraded vehicle-mounted device, and the to-be-upgraded vehicle-mounted device performs the security verification by using the negotiated third key and fourth key. In this way, a security processing process of the upgrade file that should be independently completed by the vehicle-mounted control device is jointly completed by the communications device and the vehicle-mounted control device. That is, the communications device and the vehicle-mounted control device participate in the security processing of the upgrade file by using respective parts of the keys, and do not need to restore the two parts of the keys to a complete key before performing the security processing on the upgrade file, thereby further avoiding occurrence or storage of the complete key on the vehicle-mounted control device, so that an attacker cannot obtain the complete key from the vehicle-mounted control device at one time. This greatly reduces a possibility that an attacker intercepts or tampers with the complete key, ensuring security of the upgrade file during transmission in the device upgrade system.

It should be noted that, although the foregoing implementation is described mainly by using the upgrade scenario in the intelligent vehicle/vehicle-mounted system as an example, it does not indicate that the device upgrade method in this application can be applied only to the upgrade scenario in the vehicle-mounted device. As described above, the device upgrade method in this application may be further applied to scenarios such as a scenario in which a cell gateway-home gateway manages upgrade of a smart appliance, a scenario in which a server-host manages system upgrade of a virtual machine, a scenario in which a server-router manages batch system upgrade of terminals, and a scenario in which a server-smartphone manages device upgrade of a smart wearable device. Other scenarios and examples are not listed and described one by one.

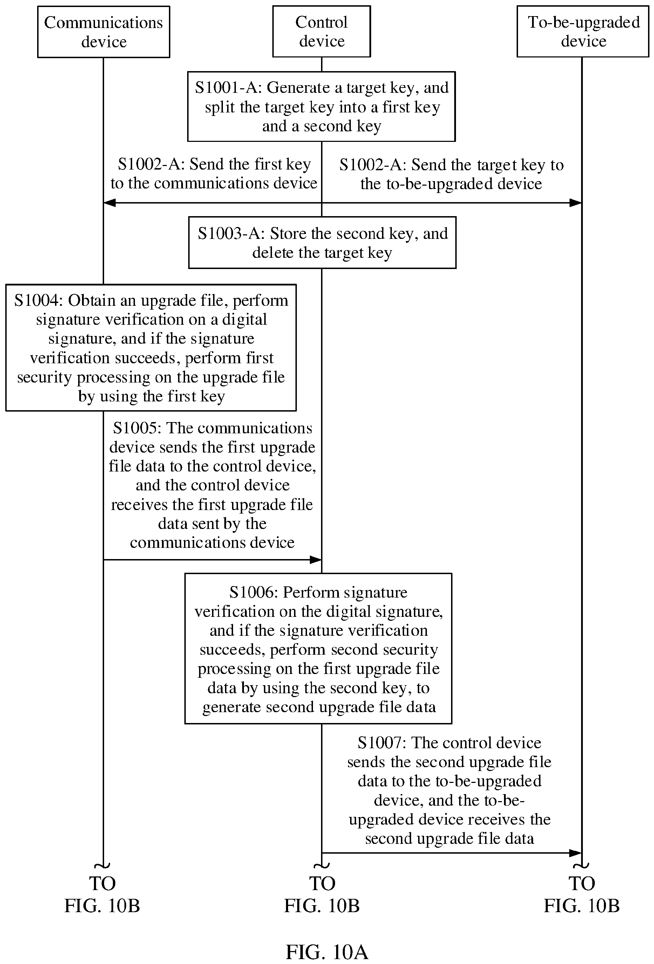

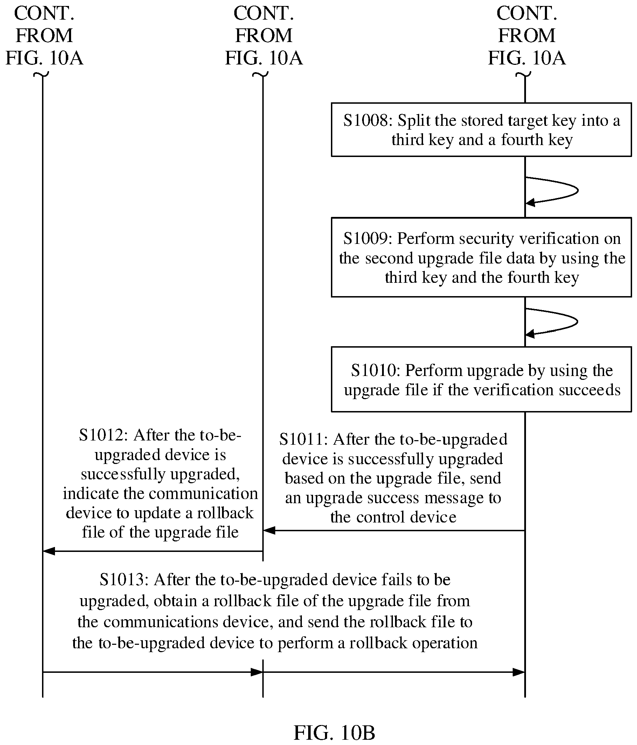

FIG. 10A and FIG. 10B are a schematic flowchart of another device upgrade method according to an implementation of the present disclosure. The device upgrade method may be applied to the system architecture 1 or the system architecture 2, and is applicable to any application scenario in FIG. 1, FIG. 2, or FIG. 3. The following provides description from the perspective of interaction of a communications device, a control device, and a to-be-upgraded device with reference to FIG. 10A and FIG. 10B. The method implementation may include steps S1001-A to S1013.

S1001-A: The control device generates a target key, and splits the target key into a first key and a second key.

S1002-A: The control device sends the first key to the communications device, and sends the target key to the to-be-upgraded device.

S1003-A: The control device stores the second key and deletes the target key.

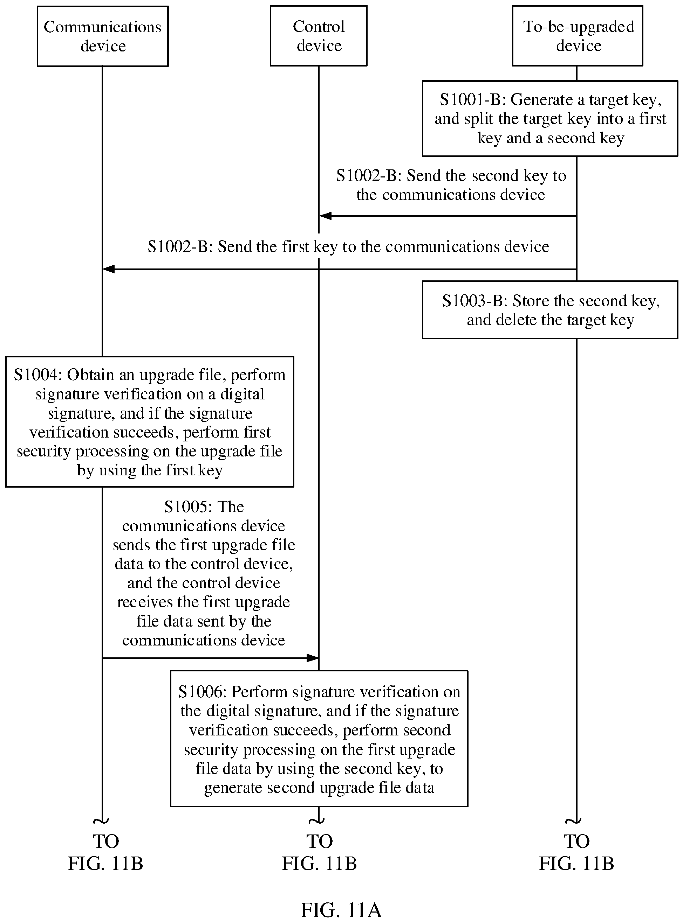

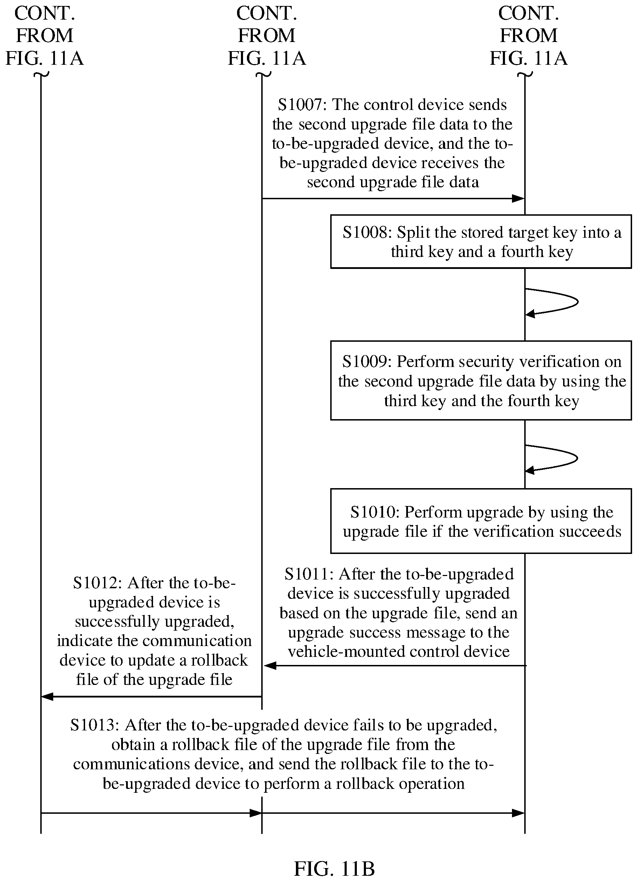

FIG. 11A and FIG. 11B are a schematic flowchart of still another device upgrade method according to an implementation of the present disclosure. Alternatively, the foregoing steps S1001-A to S1003-A may be replaced with the following steps S1001-B to S1003-B. In other words, this method implementation may include the following steps S100B to S1013.

S1001-B: The to-be-upgraded device generates a target key, and splits the target key into a first key and a second key.

S1002-B: The to-be-upgraded device sends the second key to the communications device, and sends the first key to the communications device.

S1003-B: The to-be-upgraded device stores the second key and deletes the target key.

S1004: The communications device obtains an upgrade file, performs signature verification on the digital signature, and if the signature verification succeeds, performs first security processing on the upgrade file by using the first key.

S1005: The communications device sends the first upgrade file data to the control device. The control device receives the first upgrade file data sent by the communications device.

S1006: The control device performs signature verification on the digital signature, and if the signature verification succeeds, performs second security processing on the first upgrade file data by using the second key, to generate second upgrade file data.

S1007: The control device sends the second upgrade file data to the to-be-upgraded device. The to-be-upgraded device receives the second upgrade file data.

S1008: The to-be-upgraded device splits the stored target key into the third key and the fourth key.

S1009: The to-be-upgraded device performs security verification on the second upgrade file data by using the third key and the fourth key.

S1010: If the verification succeeds, the to-be-upgraded device performs upgrade by using the upgrade file.

S1011: After the to-be-upgraded device is successfully upgraded based on the upgrade file, the to-be-upgraded device sends an upgrade success message to the control device.

S1012: After the to-be-upgraded device is successfully upgraded, the control device indicates the communications device to update a rollback file of the upgrade file.

S1013: After the to-be-upgraded device fails to be upgraded, the control device obtains a rollback file of the upgrade file from the communications device, and sends the rollback file to the to-be-upgraded device to perform a rollback operation.

Specifically, an upgrade scenario in an intelligent vehicle/vehicle-mounted system is mainly used as an example for description below. To be specific, the control device and the to-be-upgraded device may be a vehicle-mounted control device and a to-be-upgraded vehicle-mounted device in the intelligent vehicle/vehicle-mounted system. In steps S1001-A to S1003-A, the vehicle-mounted control device generates the target key (for example, generates the target key by using a key generator), splits the target key into the first key and the second key, sends the first key to the communications device, and stores the second key. In this implementation of the present disclosure, the target key is a symmetric key (that is, the third key is the same as the first key, and the fourth key is the same as the second key). Therefore, the vehicle-mounted control device needs to send the target key to the to-be-upgraded vehicle-mounted device to perform subsequent security verification. Optionally, the vehicle-mounted control device may also send the first key and the second key to the to-be-upgraded vehicle-mounted device. The vehicle-mounted control device only needs to store the second key on which the vehicle-mounted control device needs to perform the second security processing subsequently. After sending the target key to the to-be-upgraded vehicle-mounted device, the vehicle-mounted control device may delete the target key, to prevent the target key from being easily stolen or tampered with by an attacker because the target key is stored on the vehicle-mounted control device for an excessively long time.

Differences between the foregoing two sending manners are as follows: First, if the vehicle-mounted control device sends the target key, the to-be-upgraded device needs to split the target key before performing the security verification. If the vehicle-mounted control device sends the first key and the second key, the to-be-upgraded vehicle-mounted device does not need to split the target key, and can directly use the first key and the second key. Then, if the vehicle-mounted control device sends the target key, the to-be-upgraded vehicle-mounted device only needs to perform splitting in a key split manner negotiated with the vehicle-mounted control device, that is, may specifically learn of the first key and the second key. If the vehicle-mounted control device sends the first key and the second key, the vehicle-mounted control device needs to clearly indicate which of the two keys is the first key and which is the second key when sending the keys. In addition, if the to-be-upgraded vehicle-mounted device receives the target key, the to-be-upgraded vehicle-mounted device only needs to store one key. If the to-be-upgraded vehicle-mounted device receives two keys, the to-be-upgraded vehicle-mounted device needs to store the two keys. When there are different keys corresponding to a plurality of upgrade files in the to-be-upgraded vehicle-mounted device, an amount of stored data corresponding to a case of storing two keys may be doubled. Therefore, in the foregoing two manners provided in this implementation of the present disclosure, different sending manners may be selected and used according to different actual requirements in different scenarios.

For example, the vehicle-mounted control device generates a random key *k*, namely, the target key, and the vehicle-mounted control device obtains the first key *k*₁, that is, *k*₁ = *h*(*k*) through calculation by using a cryptographic hash function (cryptographic hash function) "h(.)". Further, the vehicle-mounted control device obtains the second key *k*₂ = *k* ⊕ *k*₁ through calculation by using an exclusive OR operation "⊕". The vehicle-mounted device sends *k*₁ to the communications device (a mobile device), sends k to an OTA orchestrator, and stores *k*₂ as a key of the vehicle-mounted control device (it is assumed that a transmission channel is secure). For another example, in another possible implementation, *k*₁ = *h*(*k,a*), and *k₂* = *h(k,b),* where "h(.)" is a cryptographic hash function, and a and b are constants and represent corresponding binary values that are separately superimposed after "h(.)". In this implementation of the present disclosure, the target key may also be split by using another split function or derivation algorithm, which is not listed one by one herein.

Optionally, in steps S1001-B to S1003-B, the target key may also be generated and split by the to-be-upgraded vehicle-mounted device. For a specific key generation process and a split method, refer to the specific target key generation manner and the key split manner of the vehicle-mounted control device in steps S1001-A to S1003-A. Details are not described herein again. Finally, the to-be-upgraded vehicle-mounted device needs to send the first key and the second key to the communications device and the vehicle-mounted control device, respectively, and stores the target key. Optionally, the to-be-upgraded vehicle-mounted device may alternatively store the first key and the second key. The to-be-upgraded vehicle-mounted device may directly send the first key to the communications device based on a communications capability of the to-be-upgraded vehicle-mounted device, or may forward the first key to the communications device by using the vehicle-mounted control device. For example, if the to-be-upgraded vehicle-mounted device has a relatively strong communications capability and can directly communicate with the communications device, the to-be-upgraded vehicle-mounted device may send the first key to the communications device. If the to-be-upgraded vehicle-mounted device has a relatively weak communications capability and cannot directly communicate with the communications device, the to-be-upgraded vehicle-mounted device may forward the first key by using the vehicle-mounted control device.

Optionally, the target key may alternatively be generated by a key server in the architecture 2 and then sent to the vehicle-mounted control device or the to-be-upgraded vehicle-mounted device. In other words, a key generation service is extended for the intelligent vehicle based on a dedicated capability of the key server. Further, the key server may alternatively split the target key or initially generate the two keys (the first key and the second key). This is not specifically limited in this implementation of the present disclosure.

It should be noted that sending the first key by the vehicle-mounted control device to the communications device and sending the target key (or the first key and the second key) to the to-be-upgraded vehicle-mounted device are not subject to a strict sequence. Alternatively, sending the first key by the to-be-upgraded vehicle-mounted device to the communications device and sending the second key to the vehicle-mounted control device are not subject to a strict sequence. This is not specifically limited in this implementation of the present disclosure.

In steps S 1004 to S 1007, the communications device obtains the upgrade file from an upgrade server. Because the upgrade server needs to prove that the upgrade file provided by the upgrade server is secure and authorized, the communications device needs to digitally sign the released upgrade file in advance. For example, the upgrade server signs the upgrade file by using a private key, and the communications device that receives the upgrade file that is digitally signed may perform verification on the upgrade file by using a public key. After the verification succeeds, the upgrade file is proved to be secure and authorized. Then, further security processing, namely, the first security processing, is performed. If the verification fails, it is proved that the upgrade file has been attacked by an attacker, and therefore the upgrade is canceled.

In steps S1004 to S1007, there may be a plurality of possible implementations of the first security processing of the communications device and the second security processing of the vehicle-mounted control device based on an actual secure transmission requirement. The following provides two example implementations.

Manner 1: The first security processing includes: generating a first message authentication code MAC of the upgrade file based on the first key, where the first upgrade file data includes the upgrade file and the first MAC. The second security processing includes: generating a second MAC of the upgrade file based on the second key, and aggregating the first MAC and the second MAC to obtain a third MAC, where the second upgrade file data includes the upgrade file and the third MAC.

Specifically, after determining that the vehicle-mounted device upgrade system needs an upgrade (for example, an upgrade system request of the vehicle-mounted control device is received, or an upgrade instruction initiated by a user is received), the communications device obtains the upgrade file from the upgrade server. Optionally, the upgrade file is digitally signed by using a private key of the upgrade server. After obtaining the upgrade file, the communications device first performs signature verification on a digital signature of the upgrade file. If the signature verification succeeds, it indicates that the upgrade file is secure and authorized. Then, the communications device generates the first MAC for the upgrade file by using the first key, and obtains (upgrade file + first MAC), namely, the first upgrade file data. The communications device sends the first upgrade file data to the vehicle-mounted control device. After receiving the first upgrade file data, the vehicle-mounted control device first generates the second MAC for the upgrade file in the (upgrade file + first MAC), then aggregates the first MAC and the second MAC by using a preset aggregation algorithm, to obtain aggregated verification information, namely, the third MAC, and sends the second upgrade file data including (upgrade file + third MAC) to the to-be-upgraded vehicle-mounted device for verification and upgrade. Optionally, the upgrade file in the first upgrade file data sent by the communications device is further digitally signed. In this case, the first upgrade file data includes (upgrade file + digital signature + first MAC). After receiving the first upgrade file data, the vehicle-mounted control device needs to first perform signature verification on the digital signature. If the signature verification succeeds, it indicates that the upgrade file sent by the communications device is a secure and authorized upgrade file provided by the upgrade server and is not tampered with halfway. Then, the second security processing is performed on the first upgrade file data (the upgrade file + the first MAC) obtained after the signature verification. For details, refer to the foregoing related description of the second security processing. Details are not described herein again.

For example, a mobile device obtains an upgrade package, and performs verification on a digital signature σ. If the verification fails, the mobile device cancels upgrade. If the verification succeeds, the mobile device prompts a user to perform upgrade. If the user allows the upgrade, the mobile device is connected to a vehicle-mounted OTA orchestrator through Bluetooth. Then, the mobile device obtains, through calculation by using a key *k*₁, a MAC value of an upgrade file MetaD||M, namely, a first MAC: *τ*₁ = MAC(*k*₁, MetaDIIM), and sends first upgrade file data [MetaD, M, σ, *τ*₁] to the OTA orchestrator. The OTA orchestrator performs verification on σ. If the verification fails, the OTA orchestrator cancels the upgrade. If the verification succeeds, the OTA orchestrator obtains aggregated verification information of the upgrade file through calculation by using *k*₂. The OTA orchestrator first obtains, through calculation, a second MAC: *τ*₂ = MAC(*k*₂, MetaD||M), and then obtains, through calculation, the aggregated verification information, namely, a third MAC: *τ* = *τ*₁ ⊕ *τ*₂. Finally, the vehicle-mounted OTA orchestrator sends second upgrade file data [MetaD, M, *τ*] to the to-be-upgraded vehicle-mounted device to perform secure upgrade.

Manner 2: The first security processing includes: generating a first message authentication code MAC of the upgrade file based on the first key, where the first upgrade file data includes the upgrade file and the first MAC. The second security processing includes: generating a fourth MAC of the first upgrade file data based on the second key, where the second upgrade file data includes the upgrade file and the fourth MAC.

Specifically, the first security processing in this manner is the same as the first security processing in Manner 1, and details are not described herein again. For the second security processing, the fourth MAC is generated for the entire first upgrade file data (upgrade file + first MAC), and the fourth MAC is the aggregated verification information, and is related to the upgrade file, the first key, and the second key. Therefore, the vehicle-mounted control device sends the second upgrade file data including (upgrade file + fourth MAC) to the to-be-upgraded vehicle-mounted device for secure upgrade. Optionally, the upgrade file in the first upgrade file data sent by the communications device is further digitally signed. For a signature verification process of the vehicle-mounted control device, refer to the related processing procedure in Manner 1. Details are not described herein again.

For example, a mobile device obtains an upgrade package, and performs verification on a digital signature σ. If the verification fails, the mobile device cancels upgrade. If the verification succeeds, the mobile device prompts a user to perform upgrade. If the user allows the upgrade, the mobile device is connected to a vehicle-mounted OTA orchestrator through Bluetooth. Then, the mobile device obtains, through calculation by using a key *k*₁, a MAC value of an upgrade file MetaD||M, namely, a first MAC: *τ*₁ = MAC(*k*₁, MetaD||M), and sends first upgrade file data [MetaD, M, σ, *τ*₁] to the OTA orchestrator. The OTA orchestrator performs verification on σ. If the verification fails, the OTA orchestrator cancels the upgrade. If the verification succeeds, the OTA orchestrator obtains aggregated verification information namely, the fourth MAC: *τ* = MAC(*k*₂, MetaD||M||*τ*₁), of the upgrade file through calculation by using *k*₂,. Finally, the vehicle-mounted OTA orchestrator sends second upgrade file data [MetaD, M, *τ*] to the to-be-upgraded vehicle-mounted device to perform secure upgrade.

In the foregoing two manners, because generating a message authentication code for the upgrade file can ensure integrity and source authenticity of the upgrade file, a problem that the upgrade file may be tampered with and forged by an attacker during transmission in the device upgrade system can be resolved. Symmetric keys are used in a process of generating the MAC. Therefore, on a basis of ensuring data security, a calculation amount of security verification can be reduced, and upgrade efficiency can be improved.

In steps S1009 and S1010, the to-be-upgraded vehicle-mounted device first splits the stored target key into the third key and the fourth key, and performs the security verification on the second upgrade file data. If the verification succeeds, the upgrade is performed. If the verification fails, the upgrade is canceled.

Corresponding to implementations of the first security processing and the second security processing in Manner 1, the to-be-upgraded vehicle-mounted device needs to generate one MAC for the upgrade file in the second upgrade file data (upgrade file + third MAC) by using the third key (because the target key is a symmetric key, the third key is the same as the first key), and also generates another MAC for the upgrade file in the second upgrade file data (upgrade file + third MAC) by using the fourth key (because the target key is a symmetric key, the fourth key is the same as the second key). Then, the to-be-upgraded vehicle-mounted device aggregates the two generated MACs in an aggregation manner on the vehicle-mounted control device to obtain one MAC, and then compares the MAC with the third MAC. If the two MACs are the same, it indicates that the security verification succeeds. That is, the secure upgrade can be performed.

Corresponding to implementations of the first security processing and the second security processing in Manner 2, the to-be-upgraded vehicle-mounted device needs to generate one MAC for the upgrade file in the second upgrade file data (upgrade file + third MAC) by using the third key, further generates one aggregated MAC for the second upgrade file data (upgrade file + the generated MAC) by using the fourth key, and then compares the aggregated MAC with the third MAC. If the two MACs are the same, it indicates that security verification succeeds. That is, the secure upgrade can be performed.

In steps S1011 to S1013, when the to-be-upgraded vehicle-mounted device is successfully upgraded, the upgrade success message may be fed back to the vehicle-mounted control device. The upgrade success message is a message on which security protection is performed by using the fourth key. In this way, the vehicle-mounted control device may perform security verification by using the stored second key, to implement secure transmission and reuse the second key and the fourth key. Further, when the to-be-upgraded vehicle-mounted device is successfully upgraded, the vehicle-mounted control device may indicate the communications device to update the rollback file of a current upgrade file, so that the rollback file can be obtained when the upgrade file needs to be obtained next time, to extend storage of the intelligent vehicle by using a storage capability of the communications device. When the to-be-upgraded vehicle-mounted device fails to be upgraded, an upgrade failure message may be fed back to the vehicle-mounted control device. In this case, the vehicle-mounted control device may obtain the rollback file of the upgrade file from the communications device (it may be understood that the communications device needs to keep the rollback file of the upgrade file), and send the rollback file to the to-be-upgraded vehicle-mounted device to perform a rollback operation. In this implementation of the present disclosure, the communications device may provide the rollback file of the upgrade file for the intelligent vehicle. Regardless of whether the to-be-upgraded vehicle-mounted device is successfully upgraded or fails to be upgraded, the communications device may perform a rollback operation on the current upgrade file, so that the rollback file can be referenced when the to-be-upgraded vehicle-mounted device is subsequently upgraded.

In a possible implementation, before the upgrade, the to-be-upgraded vehicle-mounted device further checks metadata MetaD of an upgrade package in the upgrade file, and performs upgrade based on the upgrade package and a type of the device. For example, if the upgrade file is a \delta file, a full binary (full binary) file need to be first generated. If the upgrade file is in full binary, upgrade can directly start. A resource-rich device may use an A/B system update (A/B System Updates) mode. That is, a target to-be-upgraded vehicle-mounted device has areas A and B. A to-be-upgrade program (firmware or software) runs in the area A, and a new upgrade program is written to area B. After upgrade in the area A is complete, upgrade in the area B is performed. The normal running of an old system is not affected in a vehicle-mounted device upgrade process. A resource-constrained device needs to be upgraded in place (in place). That is, a new upgrade file directly replaces an existing upgrade file.

Based on the foregoing implementation of the device upgrade method, this application further provides a manner of obtaining the upgrade file by the vehicle-mounted control device. In a possible implementation, when the communications device obtains the upgrade file from the upgrade server, the vehicle-mounted control device also obtains the upgrade file from the upgrade server. In this way, the first upgrade file data sent by the communications device to the vehicle-mounted control device may not include the upgrade file, but include only verification information, for example, the first MAC, generated for the upgrade file by using the first key. The vehicle-mounted control device generates the second upgrade file data for the upgrade file obtained from the server and the first upgrade file data by using the second key, and finally completes a subsequent secure upgrade process. It should be noted that in the foregoing implementation, both the communications device and the vehicle-mounted control device need to perform data signature verification on the upgrade file obtained from the upgrade server, to prove that the first security processing and the second security processing are performed on a same upgrade file.

It should be noted that, although the foregoing implementation is described mainly by using the upgrade scenario in the intelligent vehicle/vehicle-mounted system as an example, it does not indicate that the device upgrade method in this application can be applied only to the upgrade scenario in the vehicle-mounted device. As described above, the device upgrade method in this application may be further applied to scenarios such as a scenario in which a cell gateway-home gateway manages upgrade of a smart appliance, a scenario in which a server-host manages system upgrade of a virtual machine, a scenario in which a server-router manages batch system upgrade of terminals, and a scenario in which a server-smartphone manages device upgrade of a smart wearable device. Other scenarios and examples are not listed and described one by one.

An implementation of the present disclosure further provides a vehicle-mounted device upgrade method. The vehicle-mounted device upgrade method may be applied to a vehicle-mounted system, and the vehicle-mounted system includes a vehicle-mounted control device and a to-be-upgraded vehicle-mounted device. For method procedures performed by the vehicle-mounted control device and the to-be-upgraded vehicle-mounted device, refer to related descriptions of the method procedures performed by the control device and the to-be-upgraded device in the method implementations in FIG. 1 to FIG. 11A and FIG. 11B. Details are not described herein again.

The foregoing describes in detail the methods in the implementations of the present disclosure, and the following provides related apparatuses of the implementations of the present disclosure.

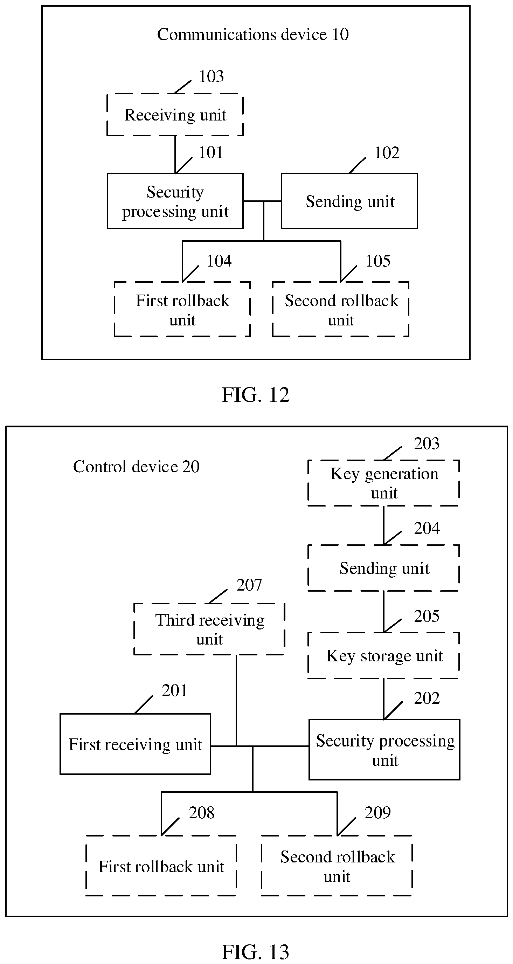

FIG. 12 is a schematic structural diagram of a communications device according to an implementation of the present disclosure. The communications device 10 may be used in a device upgrade system. For example, in the system architecture in FIG. 4 or FIG. 8, detailed descriptions of units of the communications device 10 are as follows:

A security processing unit 101 is configured to perform first security processing on an upgrade file by using a first key, to generate first upgrade file data.

A sending unit 102 is configured to send the first upgrade file data to a control device.

The first upgrade file data is used by the control device to perform second security processing on the first upgrade file data by using a second key, to generate second upgrade file data, and send the second upgrade file data to a to-be-upgraded device.

The second upgrade file data is used by the to-be-upgraded device to perform security verification on the second upgrade file data by using a third key and a fourth key, and perform upgrade by using the upgrade file if the verification succeeds, where the third key is a verification key matching the first key, and the fourth key is a verification key matching the second key.

In a possible implementation, the first security processing includes: generating a first message authentication code MAC of the upgrade file based on the first key, where the first upgrade file data includes the upgrade file and the first MAC.

In a possible implementation, the second security processing includes: generating a second MAC of the upgrade file based on the second key, and aggregating the first MAC and the second MAC to obtain a third MAC, where the second upgrade file data includes the upgrade file and the third MAC.

In a possible implementation, the second security processing includes: generating a fourth MAC of the first upgrade file data based on the second key, where the second upgrade file data includes the upgrade file and the fourth MAC.

In a possible implementation, the first key and the third key are symmetric keys, the second key and the fourth key are symmetric keys, the first key and the second key are keys obtained after the control device splits a generated target key, the target key is further sent by the control device to the to-be-upgraded device for storage, and the communications device further includes: a receiving unit 103, configured to receive the first key sent by the control device.

In a possible implementation, the first key and the third key are symmetric keys, the second key and the fourth key are symmetric keys, the first key and the second key are keys obtained after the to-be-upgraded device splits a generated target key, and the communications device further includes: a receiving unit 103, configured to receive the first key sent by the to-be-upgraded device.

In a possible implementation, the third key and the fourth key are keys obtained after the to-be-upgraded device splits the stored target key before the to-be-upgraded device performs the security verification on the second upgrade file data by using the third key and the fourth key.

In a possible implementation, the upgrade file is signed by using a digital signature. The first upgrade file data is upgrade file data generated after the communications device performs the first security processing on the upgrade file by using the first key after obtaining the upgrade file and verifying the digital signature.

In a possible implementation, the upgrade file is signed by using a digital signature. The security processing unit is specifically configured to obtain the upgrade file, perform signature verification on the digital signature, and perform the first security processing on the upgrade file by using the first key if the signature verification succeeds.

In a possible implementation, the upgrade file in the first upgrade file data is further signed by using a digital signature. The first upgrade file data is specifically used by the control device to perform signature verification on the digital signature, and if the signature verification succeeds, the second security processing is performed on the first upgrade file data by using the second key, to generate the second upgrade file data.

In a possible implementation, the communications device further includes: a first rollback unit 104, configured to: after the to-be-upgraded device is successfully upgraded, receive an indication that indicates to update a rollback file of the upgrade file and that is sent by the control device; and/or the communications device further includes: a second rollback unit 105, configured to: after the to-be-upgraded device fails to be upgraded, send a rollback file of the upgrade file to the control device, so that the rollback file is used by the to-be-upgraded device to perform a rollback operation.

In a possible implementation, the first key and the second key are generated and split by a server, and are sent by the server to the communications device and the control device, respectively. Optionally, after generating the target key, the server sends the target key to the control device or the to-be-upgraded vehicle-mounted device for splitting. For example, the server is an upgrade server, a key server, or another server. In this implementation of the present disclosure, a process of generating the target key and/or splitting the target key may be performed by the server, so that calculation amounts of the control device and the to-be-upgraded device can be reduced, and upgrade efficiency can be improved.

In a possible implementation, the third key and the fourth key are split by a server and then sent to the to-be-upgraded vehicle-mounted device. For example, the server is an upgrade server, a key server, or another server. In this implementation of the present disclosure, generation and/or splitting of the original key corresponding to the third key and the fourth key may be performed by the server, so that calculation amounts of the control device and the to-be-upgraded device can be reduced, and upgrade efficiency can be improved.

It should be noted that for functions of function units in the communications device 10 described in this implementation of the present disclosure, reference may be made to related descriptions of the communications device in the foregoing method implementations in FIG. 1 to FIG. 11A and FIG. 11B. Details are not described herein again.

FIG. 13 is a schematic structural diagram of a control device according to an implementation of the present disclosure. The control device 20 may be used in a device upgrade system. For example, in the system architecture in FIG. 4 or FIG. 8, detailed descriptions of units of the control device 20 are as follows:
A first receiving unit 201 is configured to receive first upgrade file data sent by a communications device, where the first upgrade file data is upgrade file data generated after the communications device performs first security processing on an upgrade file by using a first key.

A security processing unit 202 is configured to perform second security processing on the first upgrade file data by using a second key, to generate second upgrade file data, and send the second upgrade file data to a to-be-upgraded device.

The second upgrade file data is used by the to-be-upgraded device to perform security verification on the second upgrade file data by using a third key and a fourth key, and perform upgrade by using the upgrade file if the verification succeeds, where the third key is a verification key matching the first key, and the fourth key is a verification key matching the second key.

In a possible implementation, the first security processing includes: generating a first message authentication code MAC of the upgrade file based on the first key, where the first upgrade file data includes the upgrade file and the first MAC.

In a possible implementation, the second security processing includes: generating a second MAC of the upgrade file based on the second key, and aggregating the first MAC and the second MAC to obtain a third MAC, where the second upgrade file data includes the upgrade file and the third MAC.

In a possible implementation, the second security processing includes: generating a fourth MAC of the first upgrade file data based on the second key, where the second upgrade file data includes the upgrade file and the fourth MAC.

In a possible implementation, the first key and the third key are symmetric keys, and the second key and the fourth key are symmetric keys. The control device further includes: a key generation unit 203, configured to generate a target key, and split the target key into the first key and the second key; a sending unit 204, configured to send the target key to the to-be-upgraded device, and send the first key to the communications device; and a key storage unit 205, configured to store the second key, and delete the target key.

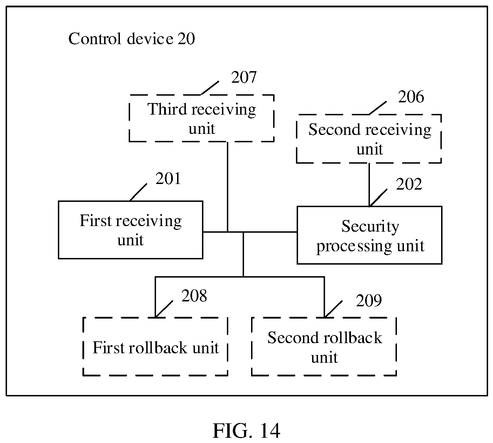

In a possible implementation, FIG. 14 is a schematic structural diagram of another control device according to an implementation of the present disclosure. The first key and the third key are symmetric keys, the second key and the fourth key are symmetric keys, the first key and the second key are keys obtained after the to-be-upgraded device splits a generated target key, and the control device further includes: a second receiving unit 206, configured to receive the second key sent by the to-be-upgraded device.

In a possible implementation, the third key and the fourth key are keys obtained after the to-be-upgraded device splits the stored target key before the to-be-upgraded device performs the security verification on the second upgrade file data.

In a possible implementation, the upgrade file is signed by using a digital signature. The first upgrade file data is upgrade file data generated after the communications device performs the first security processing on the upgrade file by using the first key after obtaining the upgrade file and verifying the digital signature.

In a possible implementation, the upgrade file in the first upgrade file data is further signed by using a digital signature. The security processing unit is specifically configured to: before performing the second security processing on the first upgrade file data by using the second key, perform signature verification on the digital signature, and perform the second security processing on the first upgrade file data by using the second key if the signature verification succeeds.

In a possible implementation, the control device further includes: a third receiving unit 207, configured to receive an upgrade success message that is sent after the to-be-upgraded device is successfully upgraded based on the upgrade file, where the upgrade success message is a message on which security protection is performed by using the fourth key.

In a possible implementation, the control device further includes: a first rollback unit 208, configured to: after it is determined that the to-be-upgraded device is successfully upgraded, indicate the communications device to update a rollback file of the upgrade file; and/or the control device further includes: a second rollback unit 209, configured to: after it is determined that the to-be-upgraded device fails to be upgraded, obtain a rollback file of the upgrade file from the communications device, and send the rollback file to the to-be-upgraded device to perform a rollback operation.

In a possible implementation, the first key and the second key are generated and split by a server, and are sent by the server to the communications device and the control device, respectively. Optionally, after generating the target key, the server sends the target key to the control device or the to-be-upgraded vehicle-mounted device for splitting. For example, the server is an upgrade server, a key server, or another server. In this implementation of the present disclosure, a process of generating the target key and/or splitting the target key may be performed by the server, so that calculation amounts of the control device and the to-be-upgraded device can be reduced, and upgrade efficiency can be improved.

In a possible implementation, the third key and the fourth key are split by a server and then sent to the to-be-upgraded vehicle-mounted device. For example, the server is an upgrade server, a key server, or another server. In this implementation of the present disclosure, generation and/or splitting of the original key corresponding to the third key and the fourth key may be performed by the server, so that calculation amounts of the control device and the to-be-upgraded device can be reduced, and upgrade efficiency can be improved.

It should be noted that for functions of function units in the control device 20 described in this implementation of the present disclosure, reference may be made to related descriptions of the control device in the foregoing method implementations in FIG. 1 to FIG. 11A and FIG. 11B. Details are not described herein again.

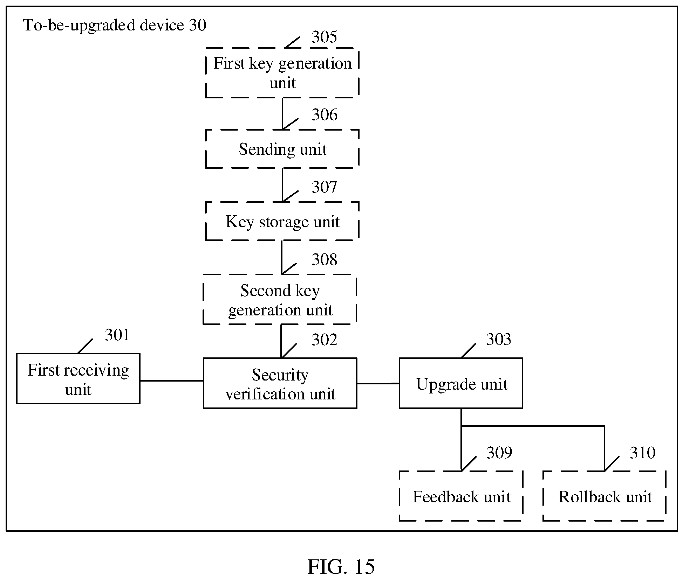

FIG. 15 is a schematic structural diagram of a to-be-upgraded device according to an implementation of the present disclosure. The to-be-upgraded device 30 may be used in a device upgrade system. For example, in the system architecture in FIG. 4 or FIG. 8, detailed descriptions of units of the to-be-upgraded device 30 are as follows:
A first receiving unit 301 is configured to receive second upgrade file data sent by a control device, where the second upgrade file data is upgrade file data generated after the control device performs, by using a second key, second security processing on first upgrade file data sent by a communications device, and the first upgrade file data is upgrade file data generated after the communications device performs first security processing on an upgrade file by using a first key.

A security verification unit 302 is configured to perform security verification on the second upgrade file data by using a third key and a fourth key, where the third key is a verification key matching the first key, and the fourth key is a verification key matching the second key.

An upgrade unit 303 is configured to perform upgrade by using the upgrade file if the verification succeeds.

In a possible implementation, the first security processing includes: generating a first message authentication code MAC of the upgrade file based on the first key, where the first upgrade file data includes the upgrade file and the first MAC.

In a possible implementation, the second security processing includes: generating a second MAC of the upgrade file based on the second key, and aggregating the first MAC and the second MAC to obtain a third MAC, where the second upgrade file data includes the upgrade file and the third MAC.

In a possible implementation, the second security processing includes: generating a fourth MAC of the first upgrade file data based on the second key, where the second upgrade file data includes the upgrade file and the fourth MAC.

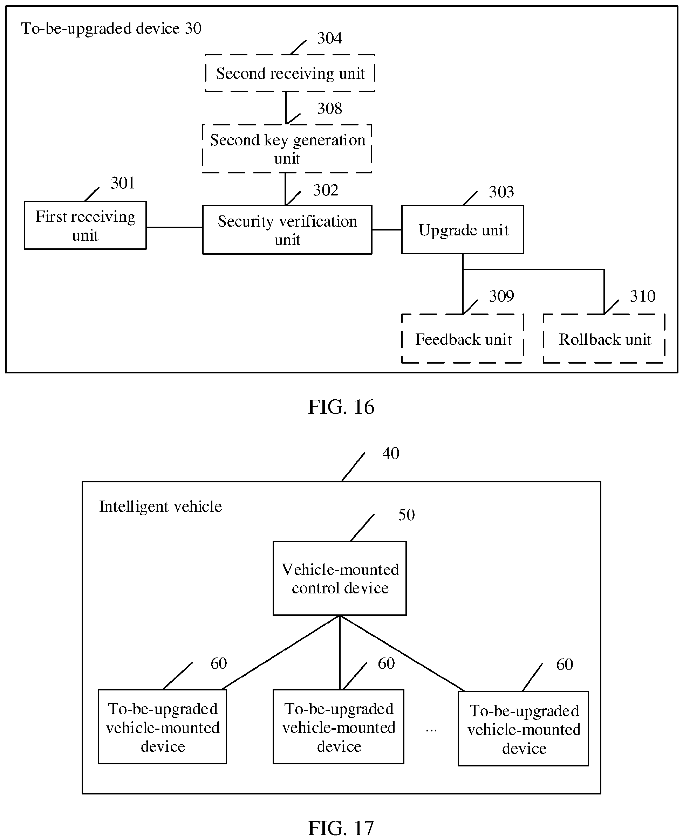

FIG. 16 is a schematic structural diagram of another to-be-upgraded device according to an implementation of the present disclosure. In a possible implementation, the first key and the third key are symmetric keys, the second key and the fourth key are symmetric keys, the first key and the second key are keys obtained after the control device splits a generated target key, and the to-be-upgraded device further includes: a second receiving unit 304, configured to receive the target key sent by the control device.

In a possible implementation, the first key and the third key are symmetric keys, and the second key and the fourth key are symmetric keys. The to-be-upgraded device further includes: a first key generation unit 305, configured to generate a target key, and split the target key into the first key and the second key; a sending unit 306, configured to send the first key to the communications device, and send the second key to the control device; and a key storage unit 307, configured to store the target key, and delete the first key and the second key.

In a possible implementation, the to-be-upgraded device further includes: a second key generation unit 308, configured to split the stored target key into the third key and the fourth key before the security verification is performed on the second upgrade file data by using the third key and the fourth key.

In a possible implementation, the upgrade file is signed by using a digital signature. The first upgrade file data is upgrade file data generated after the communications device performs the first security processing on the upgrade file by using the first key after obtaining the upgrade file and verifying the digital signature.

In a possible implementation, the upgrade file in the first upgrade file data is further signed by using a digital signature. The second upgrade file data is upgrade file data generated after the control device performs the second security processing on the first upgrade file data by using the second key after the control device performs signature verification on the digital signature in the first upgrade file data sent by the communications device and the signature verification succeeds.

In a possible implementation, the to-be-upgraded device further includes: a feedback unit 309, configured to: after the to-be-upgraded device is successfully upgraded based on the upgrade file, send an upgrade success message to the control device, where the upgrade success message is a message on which security protection is performed by using the fourth key.

In a possible implementation, the to-be-upgraded device further includes: a rollback unit 310, configured to: after it is determined that the to-be-upgraded device fails to be upgraded, obtain a rollback file of the upgrade file from the control device to perform a rollback operation.

In a possible implementation, the first key and the second key are generated and split by a server, and are sent by the server to the communications device and the control device, respectively. Optionally, after generating the target key, the server sends the target key to the control device or the to-be-upgraded vehicle-mounted device for splitting. For example, the server is an upgrade server, a key server, or another server. In this implementation of the present disclosure, a process of generating the target key and/or splitting the target key may be performed by the server, so that calculation amounts of the control device and the to-be-upgraded device can be reduced, and upgrade efficiency can be improved.

In a possible implementation, the third key and the fourth key are split by a server and then sent to the to-be-upgraded vehicle-mounted device. For example, the server is an upgrade server, a key server, or another server. In this implementation of the present disclosure, generation and/or splitting of the original key corresponding to the third key and the fourth key may be performed by the server, so that calculation amounts of the control device and the to-be-upgraded device can be reduced, and upgrade efficiency can be improved.

It should be noted that for functions of function units in the to-be-upgraded device 30 described in this implementation of the present disclosure, reference may be made to related descriptions of the to-be-upgraded device in the foregoing method implementations in FIG. 1 to FIG. 11A and FIG. 11B. Details are not described herein again.

FIG. 17 is a schematic structural diagram of an intelligent vehicle according to an implementation of the present disclosure. The intelligent vehicle 40 includes a vehicle-mounted control device 50 and at least one first to-be-upgraded vehicle-mounted device 60 (an example in which there are a plurality of to-be-upgraded vehicle-mounted devices is used in FIG. 11A and FIG. 11B).

The vehicle-mounted control device 50 is configured to receive first upgrade file data sent by a communications device, where the first upgrade file data is upgrade file data generated after the communications device performs first security processing on an upgrade file by using a first key. The vehicle-mounted control device 50 is configured to perform second security processing on the first upgrade file data by using a second key, to generate second upgrade file data, and send the second upgrade file data to the to-be-upgraded vehicle-mounted device. The to-be-upgraded vehicle-mounted device 60 is configured to receive the second upgrade file data, perform security verification on the second upgrade file data by using a third key and a fourth key, and perform upgrade by using the upgrade file if the verification succeeds, where the third key is a verification key matching the first key, and the fourth key is a verification key matching the second key.

In a possible implementation, the first security processing includes: generating a first message authentication code MAC of the upgrade file based on the first key, where the first upgrade file data includes the upgrade file and the first MAC.

In a possible implementation, the second security processing includes: generating a second MAC of the upgrade file based on the second key, and aggregating the first MAC and the second MAC to obtain a third MAC, where the second upgrade file data includes the upgrade file and the third MAC.

In a possible implementation, the second security processing includes: generating a fourth MAC of the first upgrade file data based on the second key, where the second upgrade file data includes the upgrade file and the fourth MAC.

In a possible implementation, the first key and the third key are symmetric keys, and the second key and the fourth key are symmetric keys. The vehicle-mounted control device 50 is further configured to generate a target key, and split the target key into the first key and the second key; send the target key to the to-be-upgraded vehicle-mounted device, and send the first key to the communications device; and store the second key, and delete the target key.

In a possible implementation, the first key and the third key are symmetric keys, and the second key and the fourth key are symmetric keys. The to-be-upgraded vehicle-mounted device 60 is configured to generate a target key, and split the target key into the first key and the second key; send the first key to the communications device, and send the second key to the vehicle-mounted control device; and store the target key, and delete the first key and the second key.

In a possible implementation, the to-be-upgraded vehicle-mounted device 60 is further configured to split the stored target key into the third key and the fourth key before performing the security verification on the second upgrade file data by using the third key and the fourth key.

In a possible implementation, the upgrade file is signed by using a digital signature. The first upgrade file data is upgrade file data generated after the communications device performs the first security processing on the upgrade file by using the first key after obtaining the upgrade file and verifying the digital signature.

In a possible implementation, the upgrade file in the first upgrade file data is further signed by using a digital signature.

The vehicle-mounted control device 50 is further configured to: before performing the second security processing on the first upgrade file data by using the second key, perform signature verification on the digital signature, and perform the second security processing on the first upgrade file data by using the second key if the signature verification succeeds.

In a possible implementation, the to-be-upgraded vehicle-mounted device 60 is further configured to: after to-be-upgraded vehicle-mounted device is successfully upgraded based on the upgrade file, send an upgrade success message to the vehicle-mounted control device, where the upgrade success message is a message on which security protection is performed by using the fourth key.

In a possible implementation, the vehicle-mounted control device 50 is further configured to: after determining that the to-be-upgraded vehicle-mounted device is successfully upgraded, indicate the communications device to update a rollback file of the upgrade file; and/or
the vehicle-mounted control device 50 is further configured to: after determining that the to-be-upgraded vehicle-mounted device fails to be upgraded, obtain a rollback file of the upgrade file from the communications device, and send the rollback file to the to-be-upgraded vehicle-mounted device to perform a rollback operation.

In a possible implementation, the first key and the second key are generated and split by a server, and are sent by the server to the communications device and the vehicle-mounted control device, respectively. Optionally, after generating the target key, the server sends the target key to the vehicle-mounted control device or the to-be-upgraded vehicle-mounted device for splitting. For example, the server is an upgrade server, a key server, or another server. In this implementation of the present disclosure, a process of generating the target key and/or splitting the target key may be performed by the server, so that calculation amounts of the vehicle-mounted control device and the to-be-upgraded vehicle-mounted device can be reduced, and upgrade efficiency can be improved.

In a possible implementation, the third key and the fourth key are split by a server and then sent to the to-be-upgraded vehicle-mounted device. For example, the server is an upgrade server, a key server, or another server. In this implementation of the present disclosure, generation and/or splitting of the original key corresponding to the third key and the fourth key may be performed by the server, so that calculation amounts of the vehicle-mounted control device and the to-be-upgraded vehicle-mounted device can be reduced, and upgrade efficiency can be improved.

It should be noted that, for the vehicle-mounted control device 50 and the to-be-upgraded vehicle-mounted device 60 in the intelligent vehicle 10 described in this implementation of the present disclosure, reference may be made to related descriptions of the vehicle-mounted control device and the to-be-upgraded vehicle-mounted device in the method implementations described in FIG. 1 and FIG. 11A and FIG. 11B. Details are not described herein again.

It can be understood that, the intelligent vehicle 10 may further use technologies such as a computer, modern sensing, information convergence, communications, artificial intelligence, and automatic control, and integrate functions such as an intelligent driving system, a life service system, a safety protection system, a positioning service system, and a car service system. This is not specifically limited in this application, and details are not described herein.

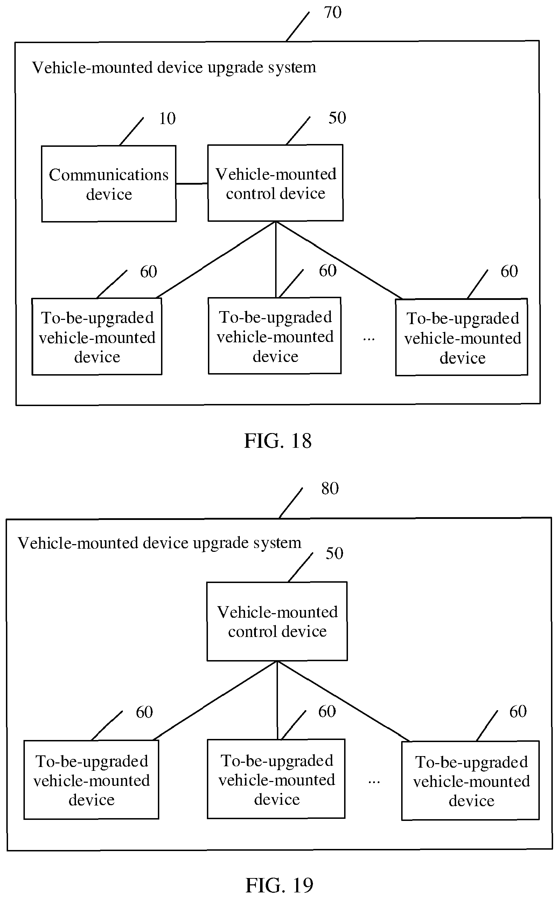

FIG. 18 is a schematic structural diagram of a vehicle-mounted device upgrade system according to an implementation of the present disclosure. The vehicle-mounted device upgrade system 70 includes a communications device 10, a vehicle-mounted control device 50, and at least one to-be-upgraded vehicle-mounted device 60 (an example in which there are a plurality of to-be-upgraded vehicle-mounted devices is used in FIG. 18). FIG. 19 is a schematic structural diagram of another vehicle-mounted device upgrade system according to an implementation of the present disclosure. The vehicle-mounted device upgrade system 80 includes a vehicle-mounted control device 50 and at least one to-be-upgraded vehicle-mounted device 60 (an example in which there are a plurality of to-be-upgraded vehicle-mounted devices is used in FIG. 19). Specifically, for related functions of the vehicle-mounted device upgrade system 70 and the vehicle-mounted device upgrade system 80, refer to related descriptions in the method implementations in FIG. 1 to FIG. 11A and FIG. 11B. Details are not described herein again.

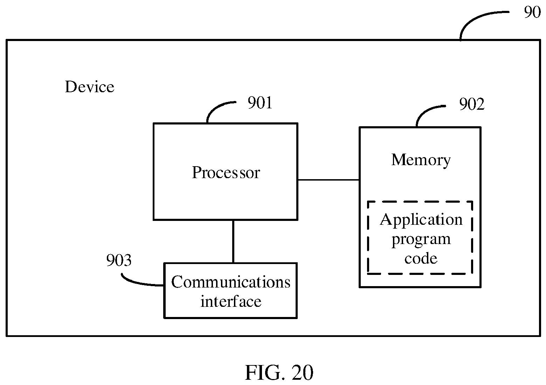

FIG. 20 is a schematic structural diagram of a device according to an implementation of the present disclosure. The vehicle-mounted control device 50, the to-be-upgraded vehicle-mounted device 60, and the communications device 10 in the intelligent vehicle 40 may all be implemented by using a structure in FIG. 20. The device 90 includes at least one processor 901, at least one memory 902, and at least one communications interface 903. In addition, the device may further include general-purpose components such as an antenna, and details are not described herein.

The processor 901 may be a general purpose central processing unit (CPU), a microprocessor, an application-specific integrated circuit (application-specific integrated circuit, ASIC), or one or more integrated circuits configured to control execution of the foregoing solution.

The communications interface 903 is used for communication with another device or a communications network, for example, an upgrade server, a key server, or a vehicle-mounted device.

The memory 902 may be a read-only memory (read-only memory, ROM) or another type of static storage device that can store static information and instructions; or a random access memory (random access memory, RAM) or another type of dynamic storage device that can store information and instructions; or may be an electrically erasable programmable read-only memory (Electrically Erasable Programmable Read-Only Memory, EEPROM), a compact disc read-only memory (Compact Disc Read-Only Memory, CD-ROM) or another compact disc storage medium, optical disc storage medium (including a compact disc, a laser disc, an optical disc, a digital versatile disc, a Blu-ray disc, or the like) and magnetic disk storage medium, another magnetic storage device, or any other medium that can be configured to carry or store expected program code in a form of an instruction or a data structure and that is accessible by a computer, but is not limited thereto. The memory may exist independently, and is connected to the processor by using the bus. Alternatively, the memory may be integrated with the processor.

The memory 902 is configured to store application program code used to execute the foregoing solution, and the processor 901 controls and executes the program code. The processor 901 is configured to execute the application program code stored in the memory 902, to implement related functions of the vehicle-mounted control device 50, the to-be-upgraded vehicle-mounted device 60, and the communications device 10.

It should be noted that, for functions of the vehicle-mounted control device 50, the to-be-upgraded vehicle-mounted device 60, and the communications device 10 described in this implementation of the present disclosure, reference may be made to related descriptions in the method implementations described in FIG. 1 and FIG. 11A and FIG. 11B. Details are not described herein again.

An implementation of the present disclosure further provides a computer storage medium, and the computer storage medium may store a program. When the program is executed, some or all of the steps of any one of the device upgrade methods described in the foregoing method implementations are included.

An implementation of the present disclosure further provides a computer program, and the computer program includes instructions. When a computer executes the computer program, the computer may be enabled to perform some or all of the steps of any one of the device upgrade methods.

In the foregoing implementations, the description of each implementation has respective focuses. For a part that is not described in detail in an implementation, refer to related descriptions in other implementations.

It should be noted that, for brief description, the foregoing method implementations are represented as a series of actions. However, a person skilled in the art should appreciate that this application is not limited to the described sequence of the actions, because some steps may be performed in another sequence or simultaneously according to this application. It should be further appreciated by a person skilled in the art that the implementations described in this specification all belong to preferred implementations, and the involved actions and modules are not necessarily required by this application.

In the several implementations provided in this application, it should be understood that the disclosed apparatus may be implemented in another manner. For example, the described apparatus implementations are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communications connections may be implemented through some interfaces. The indirect couplings or communications connections between the apparatuses or units may be implemented in electrical, mechanical, or another form.

The foregoing units described as separate parts may or may not be physically separate, and parts displayed as units may or may not be physical units, may be located in one position, or may be distributed on a plurality of network units. Some or all of the units may be selected based on actual requirements to achieve the objective of the solutions of the implementations.

In addition, functional units in the implementations of this application may be integrated into one processing unit, or each of the units may exist alone physically, or two or more units are integrated into one unit. The integrated unit may be implemented in a form of hardware, or may be implemented in a form of a software functional unit.

When the foregoing integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in the implementations of this application. The storage medium may include any medium that can store program code, such as a USB flash drive, a removable hard disk, a magnetic disk, an optical disc, a read-only memory (Read-Only Memory, ROM for short), or a random access memory (Random Access Memory, RAM for short).

The scope of protection shall be defined by the appended claims.

## Claims

1. A device upgrade method, applied to a device upgrade system, wherein the device upgrade system comprises a control device and a to-be-upgraded device, and the method comprises:
receiving (S902), by the control device, first upgrade file data sent by a communications device, wherein the first upgrade file data is upgrade file data generated after the communications device performs first security processing on an upgrade file by using a first key;
performing (S903), by the control device, second security processing on the first upgrade file data by using a second key, to generate second upgrade file data, and sending the second upgrade file data to the to-be-upgraded device; and
receiving (S904), by the to-be-upgraded device, the second upgrade file data, performing (S905) security verification on the second upgrade file data by using a third key and a fourth key, and performing (S906) upgrade by using the upgrade file if the verification succeeds, wherein the third key is a verification key matching the first key, and the fourth key is a verification key matching the second key;
wherein the first key and the third key are symmetric keys, the second key and the fourth key are symmetric keys, and the method further comprises:
generating, by the control device, a target key, and splitting the target key into the first key and the second key;
sending, by the control device, the target key to the to-be-upgraded device, and sending the first key to the communications device; and
storing, by the control device, the second key, and deleting the target key;
or
wherein the first key and the third key are symmetric keys, the second key and the fourth key are symmetric keys, and the method further comprises:
generating, by the to-be-upgraded device, a target key, and splitting the target key into the first key and the second key;
sending, by the to-be-upgraded device, the first key to the communications device, and sending the second key to the control device; and
storing, by the to-be-upgraded device, the target key, and deleting the first key and the second key.

2. The method according to claim 1, wherein the first security processing comprises: generating a first message authentication code MAC of the upgrade file based on the first key, wherein the first upgrade file data comprises the upgrade file and the first MAC.

3. The method according to claim 2, wherein the second security processing comprises: generating a second MAC of the upgrade file based on the second key, and aggregating the first MAC and the second MAC to obtain a third MAC, wherein the second upgrade file data comprises the upgrade file and the third MAC.

4. The method according to claim 2, wherein the second security processing comprises: generating a fourth MAC of the first upgrade file data based on the second key, wherein the second upgrade file data comprises the upgrade file and the fourth MAC.

5. The method according to any one of claims 1 to 4, wherein the method further comprises:
splitting, by the to-be-upgraded device, the stored target key into the third key and the fourth key before performing the security verification on the second upgrade file data by using the third key and the fourth key.

6. A device upgrade system, comprising a control device (20) and a to-be-upgraded device (30), wherein
the control device is configured to:
receive first upgrade file data sent by a communications device (10), wherein the first upgrade file data is upgrade file data generated after the communications device performs first security processing on an upgrade file by using a first key; and
perform second security processing on the first upgrade file data by using a second key, to generate second upgrade file data, and send the second upgrade file data to the to-be-upgraded device; and
the to-be-upgraded device is configured to receive the second upgrade file data, perform security verification on the second upgrade file data by using a third key and a fourth key, and perform upgrade by using the upgrade file if the verification succeeds, wherein the third key is a verification key matching the first key, and the fourth key is a verification key matching the second key;
wherein the first key and the third key are symmetric keys, and the second key and the fourth key are symmetric keys; and
the control device is further configured to:
generate a target key, and split the target key into the first key and the second key;
send the target key to the to-be-upgraded device, and send the first key to the communications device; and
store the second key, and delete the target key;
or
wherein the first key and the third key are symmetric keys, and the second key and the fourth key are symmetric keys; and
the to-be-upgraded device is further configured to:
generate a target key, and split the target key into the first key and the second key;
send the first key to the communications device, and send the second key to the control device; and
store the target key, and delete the first key and the second key.

7. The system according to claim 6, wherein
the to-be-upgraded device is further configured to split the stored target key into the third key and the fourth key before performing the security verification on the second upgrade file data by using the third key and the fourth key.

8. A control device, comprising:
a first receiving unit (201), configured to receive first upgrade file data sent by a communications device, wherein the first upgrade file data is upgrade file data generated after the communications device performs first security processing on an upgrade file by using a first key; and
a security processing unit (202), configured to perform second security processing on the first upgrade file data by using a second key, to generate second upgrade file data, and send the second upgrade file data to a to-be-upgraded device, wherein
the second upgrade file data is used by the to-be-upgraded device to perform security verification on the second upgrade file data by using a third key and a fourth key, and perform upgrade by using the upgrade file if the verification succeeds, wherein the third key is a verification key matching the first key, and the fourth key is a verification key matching the second key;
wherein the first key and the third key are symmetric keys, the second key and the fourth key are symmetric keys, and the control device further comprises:
a key generation unit (203), configured to generate a target key, and split the target key into the first key and the second key;
a sending unit (204), configured to send the target key to the to-be-upgraded device, and send the first key to the communications device; and
a key storage unit (205), configured to store the second key, and delete the target key.

9. A to-be-upgraded device (30), comprising:
a first receiving unit (301), configured to receive second upgrade file data sent by a control device, wherein the second upgrade file data is upgrade file data generated after the control device performs, by using a second key, second security processing on first upgrade file data sent by a communications device, and the first upgrade file data is upgrade file data generated after the communications device performs first security processing on an upgrade file by using a first key;
a security verification unit (302), configured to perform security verification on the second upgrade file data by using a third key and a fourth key, wherein the third key is a verification key matching the first key, and the fourth key is a verification key matching the second key; and
an upgrade unit (303), configured to perform upgrade by using the upgrade file if the verification succeeds;
wherein the first key and the third key are symmetric keys, the second key and the fourth key are symmetric keys, and the to-be-upgraded device further comprises:
a first key generation unit (305), configured to generate a target key, and split the target key into the first key and the second key;
a sending unit (306), configured to send the first key to the communications device, and send the second key to the control device; and
a key storage unit (307), configured to store the target key, and delete the first key and the second key.

10. The to-be-upgraded device according to claim 9, wherein the to-be-upgraded device further comprises:
a second key generation unit (308), configured to split the stored target key into the third key and the fourth key before the security verification is performed on the second upgrade file data by using the third key and the fourth key.

## Patentansprüche

1. Upgrade-Verfahren für eine Vorrichtung, angewendet auf ein Upgrade-System für eine Vorrichtung, wobei das Upgrade-System für eine Vorrichtung eine Steuervorrichtung und eine upzugradende Vorrichtung umfasst, und das Verfahren Folgendes umfasst:
Empfangen (S902), durch die Steuervorrichtung, von ersten Upgrade-Dateidaten, die durch eine Kommunikationsvorrichtung gesendet werden, wobei die ersten Upgrade-Dateidaten Upgrade-Dateidaten sind, die erzeugt werden, nachdem die Kommunikationsvorrichtung erste Sicherheitsverarbeitung an einer Upgrade-Datei unter Verwendung eines ersten Schlüssels durchführt;
Durchführen (S903), durch die Steuervorrichtung, von zweiter Sicherheitsverarbeitung an den ersten Upgrade-Dateidaten unter Verwendung eines zweiten Schlüssels, um zweite Upgrade-Dateidaten zu erzeugen, und Senden der zweiten Upgrade-Dateidaten an die upzugradende Vorrichtung; und
Empfangen (S904), durch die upzugradende Vorrichtung, der zweiten Upgrade-Dateidaten, Durchführen (S905) von Sicherheitsverifizierung an den zweiten Upgrade-Dateidaten unter Verwendung eines dritten Schlüssels und eines vierten Schlüssels und Durchführen (S906) eines Upgrades unter Verwendung der Upgrade-Datei, wenn die Verifizierung erfolgreich ist, wobei der dritte Schlüssel ein Verifizierungsschlüssel ist, der mit dem ersten Schlüssel übereinstimmt und der vierte Schlüssel ein Verifizierungsschlüssel ist, der mit dem zweiten Schlüssel übereinstimmt;
wobei der erste Schlüssel und der dritte Schlüssel symmetrische Schlüssel sind, der zweite Schlüssel und der vierte Schlüssel symmetrische Schlüssel sind und das Verfahren ferner Folgendes umfasst:
Erzeugen, durch die Steuervorrichtung, eines Zielschlüssels und Aufteilen des Zielschlüssels in den ersten Schlüssel und den zweiten Schlüssel;
Senden, durch die Steuervorrichtung, des Zielschlüssels an die upzugradende Vorrichtung und Senden des ersten Schlüssels an die Kommunikationsvorrichtung; und
Speichern, durch die Steuervorrichtung, des zweiten Schlüssels und Löschen des Zielschlüssels;
oder
wobei der erste Schlüssel und der dritte Schlüssel symmetrische Schlüssel sind, der zweite Schlüssel und der vierte Schlüssel symmetrische Schlüssel sind und das Verfahren ferner Folgendes umfasst:
Erzeugen, durch die upzugradende Vorrichtung, eines Zielschlüssels und Aufteilen des Zielschlüssels in den ersten Schlüssel und den zweiten Schlüssel;
Senden, durch die upzugradende Vorrichtung, des ersten Schlüssels an die Kommunikationsvorrichtung und Senden des zweiten Schlüssels an die Steuervorrichtung; und
Speichern, durch die upzugradende Vorrichtung, des Zielschlüssels und Löschen des ersten Schlüssels und des zweiten Schlüssels.

2. Verfahren nach Anspruch 1, wobei die erste Sicherheitsverarbeitung Folgendes umfasst: Erzeugen eines ersten Nachrichtenauthentifizierungscodes, MAC, der Upgrade-Datei basierend auf dem ersten Schlüssel, wobei die ersten Upgrade-Dateidaten die Upgrade-Datei und den ersten MAC umfassen.

3. Verfahren nach Anspruch 2, wobei die zweite Sicherheitsverarbeitung Folgendes umfasst: Erzeugen eines zweiten MAC der Upgrade-Datei basierend auf dem zweiten Schlüssel und Aggregieren des ersten MAC und des zweiten MAC, um einen dritten MAC zu erhalten, wobei die zweiten Upgrade-Dateidaten die Upgrade-Datei und den dritten MAC umfassen.

4. Verfahren nach Anspruch 2, wobei die zweite Sicherheitsverarbeitung Folgendes umfasst: Erzeugen eines vierten MAC der ersten Upgrade-Dateidaten basierend auf dem zweiten Schlüssel, wobei die zweiten Upgrade-Dateidaten die Upgrade-Datei und den vierten MAC umfassen.

5. Verfahren nach einem der Ansprüche 1 bis 4, wobei das Verfahren ferner Folgendes umfasst:
Aufteilen, durch die upzugradende Vorrichtung, des gespeicherten Zielschlüssels in den dritten Schlüssel und den vierten Schlüssel vor dem Durchführen der Sicherheitsverifizierung an den zweiten Upgrade-Dateidaten unter Verwendung des dritten Schlüssels und des vierten Schlüssels.

6. Upgrade-System für eine Vorrichtung, umfassend eine Steuervorrichtung (20) und eine upzugradende Vorrichtung (30), wobei
die Steuervorrichtung für Folgendes konfiguriert ist:
Empfangen von ersten Upgrade-Dateidaten, die durch eine Kommunikationsvorrichtung (10) gesendet werden, wobei die ersten Upgrade-Dateidaten Upgrade-Dateidaten sind, die erzeugt werden, nachdem die Kommunikationsvorrichtung erste Sicherheitsverarbeitung an einer Upgrade-Datei unter Verwendung eines ersten Schlüssels durchführt; und
Durchführen von zweiter Sicherheitsverarbeitung an den ersten Upgrade-Dateidaten unter Verwendung eines zweiten Schlüssels, um zweite Upgrade-Dateidaten zu erzeugen und Senden der zweiten Upgrade-Dateidaten an die upzugradende Vorrichtung; und
die upzugradende Vorrichtung konfiguriert ist, um die zweiten Upgrade-Dateidaten zu empfangen, Sicherheitsverifizierung an den zweiten Upgrade-Dateidaten unter Verwendung eines dritten Schlüssels und eines vierten Schlüssels durchzuführen und ein Upgrade unter Verwendung der Upgrade-Datei durchzuführen, wenn die Verifizierung erfolgreich ist, wobei der dritte Schlüssel ein Verifizierungsschlüssel ist, der mit dem ersten Schlüssel übereinstimmt und der vierte Schlüssel ein Verifizierungsschlüssel ist, der mit dem zweiten Schlüssel übereinstimmt;
wobei der erste Schlüssel und der dritte Schlüssel symmetrische Schlüssel sind und der zweite Schlüssel und der vierte Schlüssel symmetrische Schlüssel sind; und
die Steuervorrichtung ferner für Folgendes konfiguriert ist:
Erzeugen eines Zielschlüssels und Aufteilen des Zielschlüssels in den ersten Schlüssel und den zweiten Schlüssel;
Senden des Zielschlüssels an die upzugradende Vorrichtung und Senden des ersten Schlüssels an die Kommunikationsvorrichtung; und
Speichern des zweiten Schlüssels und Löschen des Zielschlüssels; oder
wobei der erste Schlüssel und der dritte Schlüssel symmetrische Schlüssel sind und der zweite Schlüssel und der vierte Schlüssel symmetrische Schlüssel sind; und
die upzugradende Vorrichtung ferner für Folgendes konfiguriert ist:
Erzeugen eines Zielschlüssels und Aufteilen des Zielschlüssels in den ersten Schlüssel und den zweiten Schlüssel;
Senden des ersten Schlüssels an die Kommunikationsvorrichtung und Senden des zweiten Schlüssels an die Steuervorrichtung; und
Speichern des Zielschlüssels und Löschen des ersten Schlüssels und des zweiten Schlüssels.

7. System nach Anspruch 6, wobei
die upzugradende Vorrichtung ferner konfiguriert ist, um den gespeicherten Zielschlüssel in den dritten Schlüssel und den vierten Schlüssel aufzuteilen, bevor die Sicherheitsverifizierung an den zweiten Upgrade-Dateidaten unter Verwendung des dritten Schlüssels und des vierten Schlüssels durchgeführt wird.

8. Steuervorrichtung, umfassend:
eine erste Empfangseinheit (201), die konfiguriert ist, um erste Upgrade-Dateidaten zu empfangen, die durch eine Kommunikationsvorrichtung gesendet werden, wobei die ersten Upgrade-Dateidaten Upgrade-Dateidaten sind, die erzeugt werden, nachdem die Kommunikationsvorrichtung erste Sicherheitsverarbeitung an einer Upgrade-Datei unter Verwendung eines ersten Schlüssels durchführt; und
eine Sicherheitsverarbeitungseinheit (202), die konfiguriert ist, um zweite Sicherheitsverarbeitung an den ersten Upgrade-Dateidaten unter Verwendung eines zweiten Schlüssels durchzuführen, um zweite Upgrade-Dateidaten zu erzeugen und die zweiten Upgrade-Dateidaten an eine upzugradende Vorrichtung zu senden, wobei
die zweiten Upgrade-Dateidaten durch die upzugradende Vorrichtung verwendet werden, um Sicherheitsverifizierung an den zweiten Upgrade-Dateidaten unter Verwendung eines dritten Schlüssels und eines vierten Schlüssels durchzuführen und ein Upgrade unter Verwendung der Upgrade-Datei durchzuführen, wenn die Verifizierung erfolgreich ist, wobei der dritte Schlüssel ein Verifizierungsschlüssel ist, der mit dem ersten Schlüssel übereinstimmt und der vierte Schlüssel ein Verifizierungsschlüssel ist, der mit dem zweiten Schlüssel übereinstimmt;
wobei der erste Schlüssel und der dritte Schlüssel symmetrische Schlüssel sind, der zweite Schlüssel und der vierte Schlüssel symmetrische Schlüssel sind und die Steuervorrichtung ferner Folgendes umfasst:
eine Schlüsselerzeugungseinheit (203), die konfiguriert ist, um einen Zielschlüssel zu erzeugen und den Zielschlüssel in den ersten Schlüssel und den zweiten Schlüssel aufzuteilen;
eine Sendeeinheit (204), die konfiguriert ist, um den Zielschlüssel an die upzugradende Vorrichtung zu senden und den ersten Schlüssel an die Kommunikationsvorrichtung zu senden; und
eine Schlüsselspeichereinheit (205), die konfiguriert ist, um den zweiten Schlüssel zu speichern und den Zielschlüssel zu löschen.

9. Upzugradende Vorrichtung (30), umfassend:
eine erste Empfangseinheit (301), die konfiguriert ist, um zweite Upgrade-Dateidaten zu empfangen, die durch eine Steuervorrichtung gesendet werden, wobei die zweiten Upgrade-Dateidaten Upgrade-Dateidaten sind, die erzeugt werden, nachdem die Steuervorrichtung unter Verwendung eines zweiten Schlüssels zweite Sicherheitsverarbeitung an ersten Upgrade-Dateidaten durchführt, die durch eine Kommunikationsvorrichtung gesendet werden, und die ersten Upgrade-Dateidaten Upgrade-Dateidaten sind, die erzeugt werden, nachdem die Kommunikationsvorrichtung erste Sicherheitsverarbeitung an einer Upgrade-Datei unter Verwendung eines ersten Schlüssels durchführt;
eine Sicherheitsverifizierungseinheit (302), die konfiguriert ist, um Sicherheitsverifizierung an den zweiten Upgrade-Dateidaten unter Verwendung eines dritten Schlüssels und eines vierten Schlüssels durchzuführen, wobei der dritte Schlüssel ein Verifizierungsschlüssel ist, der mit dem ersten Schlüssel übereinstimmt und der vierte Schlüssel ein Verifizierungsschlüssel ist, der mit dem zweiten Schlüssel übereinstimmt; und
eine Upgrade-Einheit (303), die konfiguriert ist, um ein Upgrade unter Verwendung der Upgrade-Datei durchzuführen, wenn die Verifizierung erfolgreich ist;
wobei der erste Schlüssel und der dritte Schlüssel symmetrische Schlüssel sind, der zweite Schlüssel und der vierte Schlüssel symmetrische Schlüssel sind und die upzugradende Vorrichtung ferner Folgendes umfasst:
eine erste Schlüsselerzeugungseinheit (305), die konfiguriert ist, um einen Zielschlüssel zu erzeugen und den Zielschlüssel in den ersten Schlüssel und den zweiten Schlüssel aufzuteilen;
eine Sendeeinheit (306), die konfiguriert ist, um den ersten Schlüssel an die Kommunikationsvorrichtung zu senden und den zweiten Schlüssel an die Steuervorrichtung zu senden; und
eine Schlüsselspeichereinheit (307), die konfiguriert ist, um den Zielschlüssel zu speichern und den ersten Schlüssel und den zweiten Schlüssel zu löschen.

10. Upzugradende Vorrichtung nach Anspruch 9, wobei die upzugradende Vorrichtung ferner Folgendes umfasst:
eine zweite Schlüsselerzeugungseinheit (308), die konfiguriert ist, um den gespeicherten Zielschlüssel in den dritten Schlüssel und den vierten Schlüssel aufzuteilen, bevor die Sicherheitsverifizierung an den zweiten Upgrade-Dateidaten unter Verwendung des dritten Schlüssels und des vierten Schlüssels durchgeführt wird.

## Revendications

1. Procédé de mise à niveau de dispositif, appliqué à un système de mise à niveau de dispositif, dans lequel le système de mise à niveau de dispositif comprend un dispositif de commande et un dispositif à mettre à niveau, et le procédé comprend :
la réception (S902), par le dispositif de commande, de premières données de fichier de mise à niveau envoyées par un dispositif de communication, dans lequel les premières données de fichier de mise à niveau sont des données de fichier de mise à niveau générées après la réalisation par le dispositif de communication d'un premier traitement de sécurité sur un fichier de mise à niveau en utilisant une première clé ;
la réalisation (S903), par le dispositif de commande, d'un second traitement de sécurité sur les premières données de fichier de mise à niveau en utilisant une deuxième clé, pour générer des secondes données de fichier de mise à niveau, et l'envoi des secondes données de fichier de mise à niveau au dispositif à mettre à niveau ; et
la réception (S904), par le dispositif à mettre à niveau, des secondes données de fichier de mise à niveau, la réalisation (S905) d'une vérification de sécurité sur les secondes données de fichier de mise à niveau en utilisant une troisième clé et une quatrième clé, et la réalisation (S906) d'une mise à niveau en utilisant le fichier de mise à niveau si la vérification réussit, dans lequel la troisième clé est une clé de vérification correspondant à la première clé, et la quatrième clé est une clé de vérification correspondant à la deuxième clé ;
dans lequel la première clé et la troisième clé sont des clés symétriques, la deuxième clé et la quatrième clé sont des clés symétriques, et le procédé comprend en outre :
la génération, par le dispositif de commande, d'une clé cible, et la division de la clé cible en la première clé et la deuxième clé ;
l'envoi, par le dispositif de commande, de la clé cible au dispositif à mettre à niveau, et l'envoi de la première clé au dispositif de communication ; et
le stockage, par le dispositif de commande, de la deuxième clé, et la suppression de la clé cible ;
ou
dans lequel la première clé et la troisième clé sont des clés symétriques, la deuxième clé et la quatrième clé sont des clés symétriques, et le procédé comprend en outre :
la génération, par le dispositif à mettre à niveau, d'une clé cible, et la division de la clé cible en la première clé et la deuxième clé ;
l'envoi, par le dispositif à mettre à niveau, de la première clé au dispositif de communication, et l'envoi de la deuxième clé au dispositif de commande ; et
le stockage, par le dispositif à mettre à niveau, de la clé cible, et la suppression de la première clé et de la deuxième clé.

2. Procédé selon la revendication 1, dans lequel le premier traitement de sécurité comprend : la génération d'un premier code d'authentification de message, MAC, du fichier de mise à niveau sur la base de la première clé, dans lequel les premières données de fichier de mise à niveau comprennent le fichier de mise à niveau et le premier MAC.

3. Procédé selon la revendication 2, dans lequel le second traitement de sécurité comprend : la génération d'un deuxième MAC du fichier de mise à niveau sur la base de la deuxième clé, et l'agrégation du premier MAC et du deuxième MAC pour obtenir un troisième MAC, dans lequel les secondes données de fichier de mise à niveau comprennent le fichier de mise à niveau et le troisième MAC.

4. Procédé selon la revendication 2, dans lequel le second traitement de sécurité comprend : la génération d'un quatrième MAC des premières données de fichier de mise à niveau sur la base de la deuxième clé, dans lequel les secondes données de fichier de mise à niveau comprennent le fichier de mise à niveau et le quatrième MAC.

5. Procédé selon l'une quelconque des revendications 1 à 4, dans lequel le procédé comprend en outre :
la division, par le dispositif à mettre à niveau, de la clé cible stockée en la troisième clé et la quatrième clé avant la réalisation de la vérification de sécurité sur les secondes données de fichier de mise à niveau en utilisant la troisième clé et la quatrième clé.

6. Système de mise à niveau de dispositif, comprenant un dispositif de commande (20) et un dispositif à mettre à niveau (30), dans lequel
le dispositif de commande est configuré pour :
recevoir des premières données de fichier de mise à niveau envoyées par un dispositif de communication (10), dans lequel les premières données de fichier de mise à niveau sont des données de fichier de mise à niveau générées après la réalisation par le dispositif de communication d'un premier traitement de sécurité sur un fichier de mise à niveau en utilisant une première clé ; et
réaliser un second traitement de sécurité sur les premières données de fichier de mise à niveau en utilisant une deuxième clé, pour générer des secondes données de fichier de mise à niveau, et envoyer les secondes données de fichier de mise à niveau au dispositif à mettre à niveau ; et
le dispositif à mettre à niveau est configuré pour recevoir les secondes données de fichier de mise à niveau, réaliser une vérification de sécurité sur les secondes données de fichier de mise à niveau en utilisant une troisième clé et une quatrième clé, et réaliser une mise à niveau en utilisant le fichier de mise à niveau si la vérification réussit, dans lequel la troisième clé est une clé de vérification correspondant à la première clé, et la quatrième clé est une clé de vérification correspondant à la deuxième clé ;
dans lequel la première clé et la troisième clé sont des clés symétriques, et la deuxième clé et la quatrième clé sont des clés symétriques ; et
le dispositif de commande est en outre configuré pour :
générer une clé cible et diviser la clé cible en la première clé et la deuxième clé ;
envoyer la clé cible au dispositif à mettre à niveau et envoyer la première clé au dispositif de communication ; et
stocker la deuxième clé et supprimer la clé cible ;
ou
dans lequel la première clé et la troisième clé sont des clés symétriques, et la deuxième clé et la quatrième clé sont des clés symétriques ; et
le dispositif à mettre à niveau est en outre configuré pour :
générer une clé cible et diviser la clé cible en la première clé et la deuxième clé ;
envoyer la première clé au dispositif de communication et envoyer la deuxième clé au dispositif de commande ; et
stocker la clé cible et supprimer la première clé et la deuxième clé.

7. Système selon la revendication 6, dans lequel
le dispositif à mettre à niveau est en outre configuré pour diviser la clé cible stockée en la troisième clé et la quatrième clé avant la réalisation de la vérification de sécurité sur les secondes données de fichier de mise à niveau en utilisant la troisième clé et la quatrième clé.

8. Dispositif de commande, comprenant :
une première unité de réception (201), configurée pour recevoir des premières données de fichier de mise à niveau envoyées par un dispositif de communication, dans lequel les premières données de fichier de mise à niveau sont des données de fichier de mise à niveau générées après la réalisation par le dispositif de communication d'un premier traitement de sécurité sur un fichier de mise à niveau en utilisant une première clé ; et
une unité de traitement de sécurité (202), configurée pour réaliser un second traitement de sécurité sur les premières données de fichier de mise à niveau en utilisant une deuxième clé, pour générer des secondes données de fichier de mise à niveau, et envoyer les secondes données de fichier de mise à niveau à un dispositif à mettre à niveau, dans lequel
les secondes données de fichier de mise à niveau sont utilisées par le dispositif à mettre à niveau pour réaliser une vérification de sécurité sur les secondes données de fichier de mise à niveau en utilisant une troisième clé et une quatrième clé, et réaliser une mise à niveau en utilisant le fichier de mise à niveau si la vérification réussit, dans lequel la troisième clé est une clé de vérification correspondant à la première clé, et la quatrième clé est une clé de vérification correspondant à la deuxième clé ;
dans lequel la première clé et la troisième clé sont des clés symétriques, la deuxième clé et la quatrième clé sont des clés symétriques, et le dispositif de commande comprend en outre :
une unité de génération de clé (203), configurée pour générer une clé cible, et diviser la clé cible en la première clé et la deuxième clé ;
une unité d'envoi (204), configurée pour envoyer la clé cible au dispositif à mettre à niveau, et envoyer la première clé au dispositif de communication ; et
une unité de stockage de clé (205), configurée pour stocker la deuxième clé et supprimer la clé cible.

9. Dispositif à mettre à niveau (30), comprenant :
une première unité de réception (301), configurée pour recevoir des secondes données de fichier de mise à niveau envoyées par un dispositif de commande, dans lequel les secondes données de fichier de mise à niveau sont des données de fichier de mise à niveau générées après la réalisation par le dispositif de commande, en utilisant une deuxième clé, d'un second traitement de sécurité sur les premières données de fichier de mise à niveau envoyées par un dispositif de communication, et les premières données de fichier de mise à niveau sont des données de fichier de mise à niveau générées après la réalisation par le dispositif de communication d'un premier traitement de sécurité sur un fichier de mise à niveau en utilisant une première clé ;
une unité de vérification de sécurité (302), configurée pour réaliser une vérification de sécurité sur les secondes données de fichier de mise à niveau en utilisant une troisième clé et une quatrième clé, dans lequel la troisième clé est une clé de vérification correspondant à la première clé, et la quatrième clé est une clé de vérification correspondant à la deuxième clé ; et
une unité de mise à niveau (303), configurée pour réaliser une mise à niveau en utilisant le fichier de mise à niveau si la vérification réussit ;
dans lequel la première clé et la troisième clé sont des clés symétriques, la deuxième clé et la quatrième clé sont des clés symétriques, et le dispositif à mettre à niveau comprend en outre :
une première unité de génération de clé (305), configurée pour générer une clé cible, et diviser la clé cible en la première clé et la deuxième clé ;
une unité d'envoi (306), configurée pour envoyer la première clé au dispositif de communication, et envoyer la deuxième clé au dispositif de commande ; et
une unité de stockage de clé (307), configurée pour stocker la clé cible, et supprimer la première clé et la deuxième clé.

10. Dispositif à mettre à niveau selon la revendication 9, dans lequel le dispositif à mettre à niveau comprend en outre :
une seconde unité de génération de clé (308), configurée pour diviser la clé cible stockée en la troisième clé et la quatrième clé avant la réalisation de la vérification de sécurité sur les secondes données de fichier de mise à niveau en utilisant la troisième clé et la quatrième clé.
